# EUROPEAN PATENT APPLICATION

(11) **EP 1 677 538 A1**
(43) Date of publication of application: **05.07.2006**
(21) Application number: 04773736.6
(22) Date of filing: 06.10.2004
(51) Int. Cl.: H04N 7/173

(54) **PROGRAM RECORDING RESERVATION SYSTEM**

(30) Priority: 07.10.2003 JP 2003348186; 22.04.2004 JP 2004126601
(71) Applicant: MATSUSHITA ELECTRIC INDUSTRIAL CO., LTD., Kadoma-shi, Osaka 571-8501 (JP)
(72) Inventor: MONTA, Hiroki c/o Matsushita Electric Ind Co, Ltd, Chuo-ku, Osaka-shi, Osaka 540-6319 (JP); KAWABATA, Minoru c/o Matsuhita Electric Ind Co Ltd, Chuo-ku, Osaka-shi, Osaka 540-6319 (JP)
(74) Representative: Gassner, Wolfgang
(86) International application number: PCT/JP2004/015111
(87) International publication number: WO 2005/036880

(57) **Abstract**

A view programming system (PRA) capable of a view programming of a show which a user wants to view, among shows (Dav) composed of content data provided from a content data source. At least one show receiving apparatus (200) can receive a show (Dav) . At least one view programming apparatus (100) programs the show receiving apparatus (200) to receive the shows (Dav). The show receiving apparatus (200) can receive an electronic mail (M) via a network (320). The view programming apparatus (100) transmits a first electronic mail (Ms) including programmed show information (IRP) prescribing a show (Dav) to be received, via the network (320) to the show receiving apparatus (200).

## Description

### TECHNICAL FIELD

The present invention relates to a view programming system which programs a plurality of receiving or recording apparatuses so that a user can view a show which the user wants to view, based on broadcast schedule information. More particularly, the present invention relates to a view programming system which enables viewing of a show which is programmed for viewing.

### BACKGROUND ART

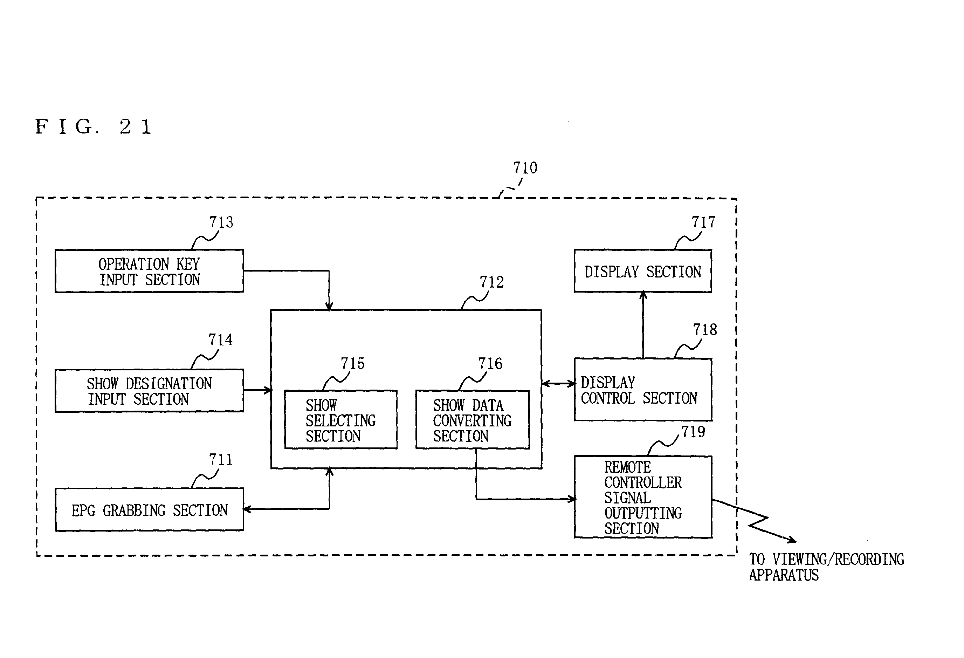

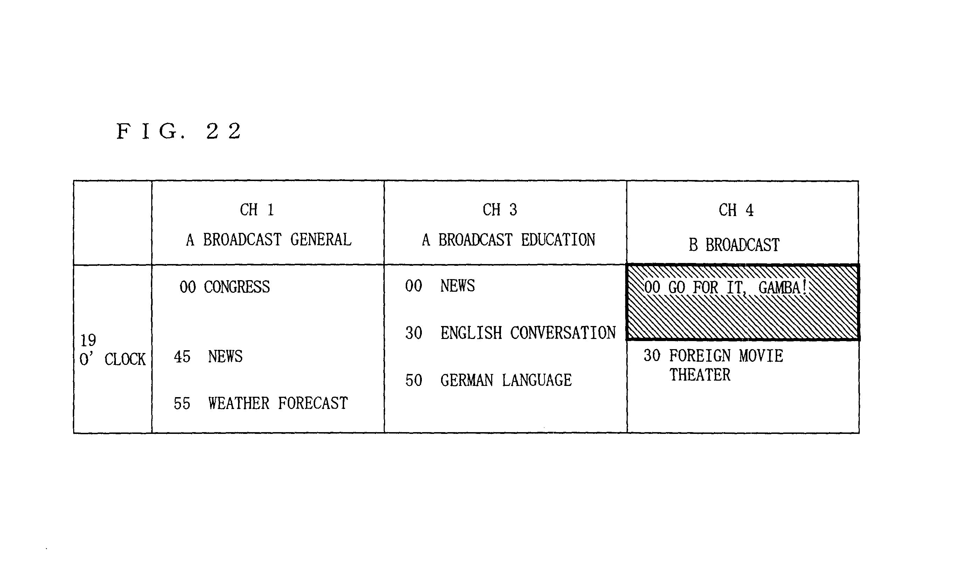

Hereinafter, a conventionally proposed timer recording system will be described with reference to FIGS. 21, 22, and 23. Firstly, a mobile terminal apparatus which is disclosed in Japanese Patent Laid-Open Publication No. 2002-252789 and is configured as a timer programming apparatus, will be described with reference to FIGS. 21 and 22.

As illustrated in FIG. 21, the mobile terminal apparatus 710 includes an EPG grabbing section 711, a control section 712, an operation key input section 713, a show designation input section 714, a display section 717, a display control section 718, and a remote controller signal outputting section 719. The EPG grabbing section 711 is connected via a communications service of a mobile telephone or the like to specific contents, grabs EPG, and decodes the EPG. The display section 717, which is composed of a small-size LCD monitor or the like, provides a message or the like to a user using video and/or audio.

The control section 712, which is composed of a microprocesser (MPU) or the like, controls an operation of the whole mobile terminal apparatus 710. Note that the control section 712 includes a show selecting section 715 and a show data converting section 716. The show selecting section 715 selects and outputs the whole or a part of data obtained by the EPG grabbing section 711, which is in turn displayed on the display section 717. The display control section 718 causes the display section 717 to display data output by the show selecting section 715.

The show designation input section 714, which is composed of a cursor key, an enter key, and the like, designates a specific show among displayed shows, depending on an operation of the user. The operation key input section 713, which is composed of a ten-key and various function keys, detects a predetermined operation, depending on an operation of the user. The show data converting section 716 decodes data of a specific show designated by the show designation input section 714 into data for viewing or timer recording of the specific show, and further converts the data into a remote controller control code. The remote controller signal outputting section 719 includes a remote controller light emitting portion which transmits the converted remote controller control code to a viewing or recording apparatus in a wired or wireless manner.

FIG. 22 illustrates an example of EPG displayed on a monitor screen (the display section 717) of the mobile terminal apparatus 710. In the example, channel numbers of TV stations are displayed in a horizontal direction, and show contents at 19 o'clock are displayed in a vertical direction. For example, when "Go for it, Gamba!!" is designated among displayed shows using the show designation input section 714(a cursor key and an enter key) of the mobile terminal apparatus 710, the show is displayed with a thick-line frame as illustrated in FIG. 22, or a display color is changed only for the designated show (hatching is used instead of changing of display colors for the sake of convenience in FIG. 22), and at the same time, the above-described decoding, and the conversion and transmission of the remote controller control code are performed.

Specifically, the mobile terminal apparatus 710 receives EPG, which is in turn displayed on a small-size display section (a monitor, etc.) of the mobile terminal apparatus 710. An operation of programming a recording is performed, and programmed contents (recording programming information) are transferred via a communications service to a viewing apparatus/recording apparatus which is located at a place different from that where the programming operation is performed.

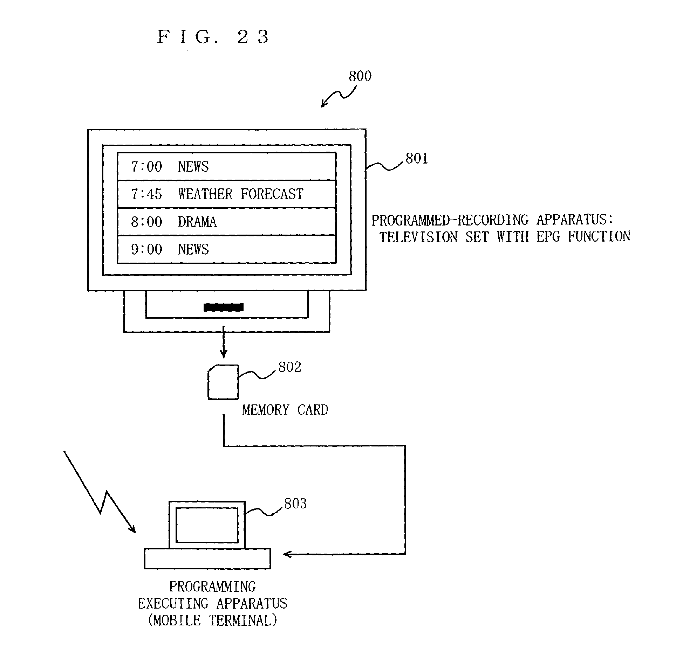

Next, a programming apparatus for performing show recording programming which is proposed in Japanese Patent Laid-Open Publication No. 2003-179837 will be described with reference to FIG. 23. The programming apparatus 800 includes a programmed recording apparatus 801, a memory card 802, and a programming executing apparatus 803. The programmed recording apparatus 801 is preferably configured as a television set having an EPG function. The programmed recording apparatus 801 receives EPG, and displays the EPG on a television display section of the television set. In response to a recording programming operation performed by the user, programmed contents are recorded into the memory card 802, which is a bridge medium.

By inserting the memory card 802, in which the programmed contents are recorded, into the programming executing apparatus 803 configured as a mobile terminal, the user can perform programmed viewing using the programming executing apparatus 803 carried on the road. As a result, a circuit scale for a programming function of the programming executing apparatus 803 can be reduced, and programmed recording can be executed using an apparatus which is located at a place different from that of an apparatus which was actually used to program a recording.

In the above-described mobile terminal apparatus and programming apparatus, recording programming and the programmed recording of a selected show are executed by the separately configured apparatuses. Specifically, programming information created by a programming input apparatus (the operation key input section 713, the show designation input section 714, and the programmed recording apparatus 801) or a programming information coding apparatus (the show data converting section 716) is input via a bridge medium or a communications means to a viewing/recording apparatus or a programming executing apparatus (the programming executing apparatus 803). For the sake of simplicity, a programming input apparatus and a programming information coding apparatus are collectively referred to as a programming input apparatus, and a viewing/recording apparatus and a programming executing apparatus are collectively referred to as a programming executing apparatus.

Thereafter, the programming executing apparatus analyzes the input programming information, and executes a recording if receiving a show for which a recording is programmed.

However, in any of the above-described mobile terminal apparatus and programming apparatus, a programming system associated with the programming input apparatus needs to be previously incorporated in the programming executing apparatus in order to execute a programmed recording, based on the programming information obtained from the programming input apparatus, resulting in the lack of general versatility. In other words, there needs to be consistency over systems of executing encoding and decoding of programming information and programmed recording based on the programming information. It is very difficult to achieve such consistency when the programming input apparatus and the programming executing apparatus are prepared by different suppliers.

When the programming executing apparatus is a stationary reception apparatus which cannot be carried by the user (referred to as "stationary TV") or a mobile reception apparatus which can be carried, though is not carried (referred to as "non-carried TV"), the user needs to take any of the following two methods.

In the first method, the user gets ready to view a show which the user wants to view in front of a stationary TV or a non-carried TV at the time when the show is broadcast at the latest. In the second method, a stationary TV or a non-carried TV which has a programmed recording function is programmed to record the show, and the show recorded by the programmed recording is viewed later.

However, in the first method, the user needs to be near the programming executing apparatus at the time when a programmed show is broadcast, and therefore, the freedom of action for the user is limited. Assuming that the programming executing apparatus is located in the user's home, if the user is on the road for a time period for which a programmed show is broadcast, the user cannot view the show. In other words, the user cannot be on the road for a time period for which a desired show is broadcast. Also, when the user is on the road, the user goes back home by the start of broadcast at the latest.

In the second method, the user can view a broadcast in real time. Particularly, shows, such as sport games and the like, which it is important to view in real time are spoiled. Even if the user is free for a broadcast time period, the user may not be in front of the programming executing apparatus (a stationary TV, a non-carried TV), so that the user has to view a show recorded by programmed recording later than (after) the end of broadcast. In other words, the user views a game after knowing its result by other means.

As a third method for solving the problems with the above-described first and second methods, it is considered that a mobile TV is used as a programming executing apparatus. Specifically, since the user carries the programming executing apparatus (mobile TV), the user can be freely on the road. The first method can avoid the constraint that the user has to go back home and be in front of a stationary TV or a non-carried TV by the start of broadcast at the latest. In addition, if there are no physical constraints, such as the condition of radio waves broadcasting a programmed show and the condition of power for the programming executing apparatus, the user can view a broadcast show in real time, so that the show with the secondmethod is overcome. However, the user fails to view a programmed show due to a physical constraint (radio wave condition or power condition) or a human factor of the user (the user is not aware of the start of a broadcast; even when the user is aware of it, the user cannot view a broadcast because of other things to do; etc.).

Regarding the mobile terminal apparatus disclosed in Japanese Patent Laid-Open Publication No. 2002-252789, since the display section of the mobile terminal is small, EPG and a recording programming operation screen are only partially displayed, as compared to the large screen of an ordinary television set. Therefore, visibility is reduced, and since only a small operation screen is displayed, operation screens need to be hierarchically displayed, so that it is troublesome to perform operations for programming or programming execution.

Therefore, an object of the present invention is to provide a view programming system with excellent operability which enables the user to view, in real time, a show which the user wants to view, and also enables the user to view a show at a later date when a physical or human factor prevents the user from viewing the show.

### DISCLOSURE OF THE INVENTION

To achieve the above objects, the present invention has the following aspects.

The present invention provides a view programming system capable of a view programming of a show which a user wants to view, among shows composed of content data provided from a content data source, comprising:
at least one show receiving apparatus capable of receiving the shows; and
at least one view programming apparatus of programming the show receiving apparatus to receive a show (Dav),
wherein the show receiving apparatus can receive an electronic mail via a network, and
the view programming apparatus transmits a first electronic mail including programmed show information prescribing the show to be received, via the network to the show receiving apparatus.

### BRIEF DESCRIPTION OF THE DRAWINGS

FIG. 1 is a diagram for explaining a view programming system according to a first embodiment of the present invention.
FIG. 2 is a block diagram illustrating a configuration of a server television of FIG. 1.
FIG. 3 is a diagram for explaining an exemplary show table displayed on a display section of FIG. 2.
FIG. 4 is a diagram illustrating a block diagram configuration of a mobile terminal of FIG. 2.
FIG. 5 is a flowchart illustrating a view programming operation of the view programming system of FIG. 1.
FIG. 6 is a block diagram illustrating a configuration of a view programming system according to a second embodiment of the present invention.
FIG. 7 is a diagram for explaining an example of the contents of a show start notifying mail transmitted to a mobile terminal from a server television of FIG. 6.
FIG. 8 is a diagram for explaining a show start notifying mail transmitted from a server television to a mobile terminal of FIG. 6, the show start notifying mail being different from that of FIG. 7.
FIG. 9 is a flowchart illustrating a view programming operation of the view programming system of FIG. 6.
FIG. 10 is a block diagram illustrating a representative configuration of a view programming system according to a third embodiment to a sixth embodiment of the present invention.
FIG. 11 is a diagram for explaining an example of the contents of a notification performed in a mobile terminal, in a view programming system according to a third embodiment of the present invention.
FIG. 12 is a diagram for explaining an example of the contents of a notification performed in a mobile terminal, in a view programming system according to a fourth embodiment of the present invention.
FIG. 13 is a diagram for explaining an example of the contents of a notification performed in a mobile terminal, in a view programming system according to a fifth embodiment of the present invention.
FIG. 14 is a diagram for explaining an example of the contents of a notification performed in a mobile terminal, in a view programming system according to a sixth embodiment of the present invention.
FIG. 15 is a diagram for explaining an example of an on-screen message displayed in the view programming system of the sixth embodiment of the present invention.
FIG. 16 is a diagram for explaining an example of an on-screen message displayed in the view programming system of the sixth embodiment of the present invention, which is different from that of FIG. 15.
FIG. 17 is a diagram for explaining an example of the contents of a show information change mail transmitted from a mobile terminal to a server television in the view programming system of the sixth embodiment of the present invention.
FIG. 18 is a block diagram illustrating a configuration of a view programming system according to a seventh embodiment of the present invention.
FIG. 19 is a diagram for explaining an example of a message displayed in the view programming system of FIG. 18.
FIG. 20 is a diagram for explaining an example of a message displayed in the view programming system of FIG. 18, which is different from that of FIG. 18.
FIG. 21 is a block diagram illustrating a configuration of a conventional view programming system.
FIG. 22 is a diagram for explaining an example of EPG displayed in the view programming system of FIG. 21.
FIG. 23 is a block diagram illustrating a configuration of a conventional view programming system which is different from that of FIG. 21.

### BEST MODE FOR CARRYING OUT THE INVENTION

Before describing embodiments of the present invention in detail, the concept of view programming in the present invention will be firstly described. The view programming of the present invention is basically different from conventional timer programming which is disclosed in, for example, Japanese Patent Laid-Open Publication Nos. 2002-252789 and 2003-179837 above. Timer programming is roughly divided into timer receiving and timer recording.

Timer receiving is to program a television set or the like to receive a show which the user wants to view, before the show is broadcast. At the time when the programmed show is broadcast, the television automatically receives and displays the programmed show.

Timer recording is to program a recording apparatus to record a show which is desired by the user. At the time when the programmed program is distributed to the recording apparatus, the recording apparatus automatically executes recording of the programmed program.

Actually, timer receiving and timer recording are performed in combination. Specifically, in timer recording, at the time when a programmed show is broadcast, a television automatically receives the programmed show as in timer receiving, and the received show is recorded into a recording apparatus. It is determined whether or not the show is displayed during recording, depending on the desire of the user. In any case, a timer switches on/off hardware, such as a television set or a recording apparatus, which executes receiving or recording of a programmed show at a predetermined time.

In contrast to this, view programming as used herein refers to a function of assisting a user itself to more certainly view a show which the user wants to view. A view programming system of the present invention does not only switch on/off hardware as in conventional timer programming, but also automatically selects a show receiving apparatus and a show recording apparatus which the user can use (access), depending on a view environment in which the user is present, at the start of broadcast of a show view-programmed by the user, thereby making it possible for the user to view the show in a form most convenient to the user.

The view environment in which the user is present specifically refers to the above-described physical constraints (a distance between the user and the show receiving apparatus, a radio wave condition, and a power condition) or human factors of the user (the user is not aware of the start of a broadcast; even when the user is aware of it, the user cannot view a broadcast because of other things to do).

In order for the user to more certainly view a show which the user wants to view, depending on the view environment in which the user is present, the view programming system of the present invention comprises a plurality of show receiving apparatuses and at least one view programming apparatus which can be used (accessed) by the user. Although the present invention is more effective when the show receiving apparatus and the view programming apparatus are physically distant from each other, the show receiving apparatus and the view programming apparatus may be close to each other. The view programming system preferably further comprises a show recording apparatus in order to achieve viewing with more certainty.

In addition, in the view programming system, at least one of the show receiving apparatus and the show recording apparatus which are distant from each other is configured as a mobile terminal which can be carried and used on the road by the user. Note that, more preferably, the view programming apparatus is also configured to be mobile.

In such a view programming system, the user uses the view programming apparatus to show viewing of a desired show. The view programming apparatus notifies a show receiving apparatus or a show recording apparatus which the user can use (access) that a show view-programmed by the user is starting soon, before the start of broadcast of the view-programmed show. Based on a user's response with respect to the information, the view programming system selectively operates the show receiving apparatus or the show recording apparatus which the user can use (access), depending on the user's view environment, to enable the user to view the show in real time or later.

As described above, view programming in the view programming system of the present invention is to selectively operate an available show view resource, depending on the user's view environment, to enable the user to view with certainty. Hereinafter, embodiments of the view programming system of the present invention will be described in detail.

### (First embodiment)

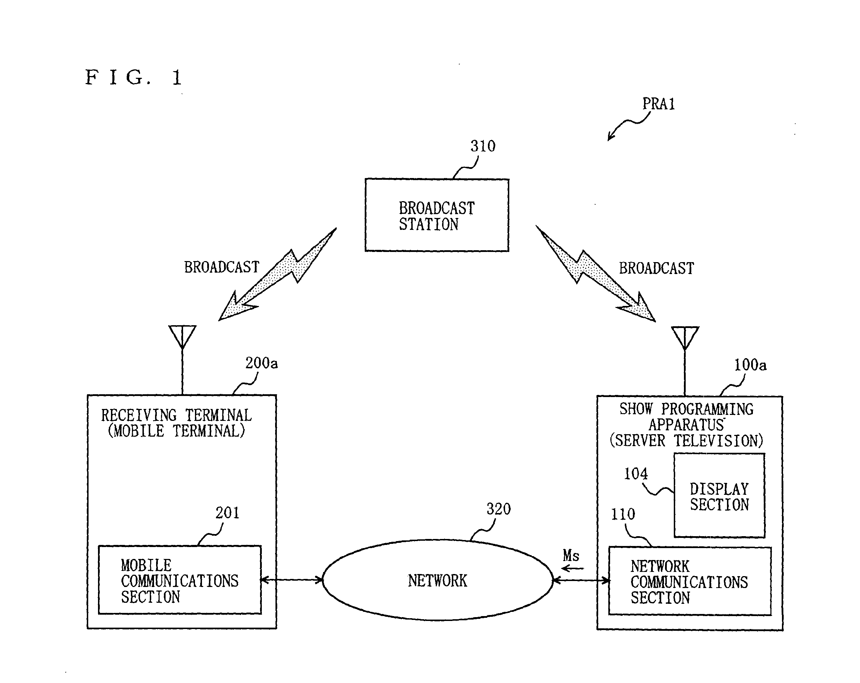

Hereinafter, a view programming system according to a first embodiment of the present invention will be described with reference to FIGS. 1, 2, 3, 4, and 5.

As illustrated in FIG. 1, the view programming system PRA1 of this embodiment includes a view programming apparatus 100a and a receiving terminal 200a. In the present invention, a show is composed of video or audio information or a combination thereof, and is transmitted at a predetermined time from a broadcast station or a server which holds the information. For the sake of simplicity, in FIG. 1, for example, the view programming system PRA1 comprises one view programming apparatus 100a and one receiving terminal 200a. However, in the present invention, the view programming system PRA1 can comprise a plurality of view programming apparatuses 100a and a plurality of mobile terminals 200a which can be used by the user.

The view programming apparatus 100a is configured to have at least three functions. The first function is to provide, to the user, information which specifies shows to be transmitted by a broadcast station or a server (referred to as "show information IBP"). The second function is to generate view programming information IRA which indicates the contents of a view programming performed by the user, based on the show information IBP provided by the first function, in response to a user' s instruction regarding viewing or recording of a show. The third function is to output the view programming information IRA generated by the second function to the mobile terminal 200a.

The show information IBP can be used to specify shows to be transmitted, and preferably includes identification information of each show, and information which specifies a transmission time of each show and a broadcast station or a server which is to transmit the show. An example of such show information IBP is a show table called EPG (Electronics Program Guide). As in the case of EPG, the user may generate the show information IBP as electronic data using an appropriate means, based on show information supplied via a publication or the like, instead of electronic data supplied via communications.

The view programming information IRA is supplied from the view programming apparatus 100a to the receiving terminal 200a via an appropriate information transfer means, such as a network 320, a bridge medium (not shown), or the like. Note that, in this embodiment, preferably, the view programming information IRA is supplied using an electronic mail via the wireless or wired network 320.

The view programming apparatus 100a preferably further has a function of receiving a show transmitted from a broadcast station or a server, and displaying or recording the show. A television set having such a function can be used as the view programming apparatus 100a. As used herein, the view programming apparatus 100a configured as a television set is referred to as a server television 100a. The server television 100a includes at least a display section 104 and a network communications section 110 in order to achieve the above-described function.

The receiving terminal 200a has a function of transmitting/receiving an electronic mail to/from the server television 100a via the network 320, and in addition, a function of receiving a show. Specifically, the receiving terminal 200a has a function of displaying a received show on a screen, or recording a show and reproducing the show at any time. In the present invention, the receiving terminal 200a may or may not be mobile.

However, the present invention is effective in an environment that the receiving terminal 200a is distant from the server television 100a and a plurality of receiving terminals 200a are present. Particularly, the present invention is most effective when the receiving terminal 200a is a mobile terminal which can be moved along with the user. As used herein, the receiving terminal 200a which is configured as a mobile terminal is referred to as a mobile terminal 200a. Note that the mobile terminal 200a is configured as a mobile telephone having a television set.

Next, a view programming operation of the view programming system PRA1 of this embodiment will be specifically described, exemplifying the server television 100a and the mobile terminal 200a which can receive digital broadcast. In FIG. 1, a broadcast station 310 broadcasts television shows and transmits additional information, such as a show table (the show information IBP) or the like. The server television 100a and the mobile terminal 200a are assumed to be located within a range which enables reception of television shows and EPG transmitted from the broadcast station 310.

The server television 100a displays the received television show or EPG on the display section 104. The server television 100a and the mobile terminal 200a transmit/receive an electronic mail M via the network 320 using the network communications section 110 and a mobile communications section 201, respectively. Note that a show start notifying mail Ms, which is one electronic mail M, is illustrated in FIG. 1, and will be described below.

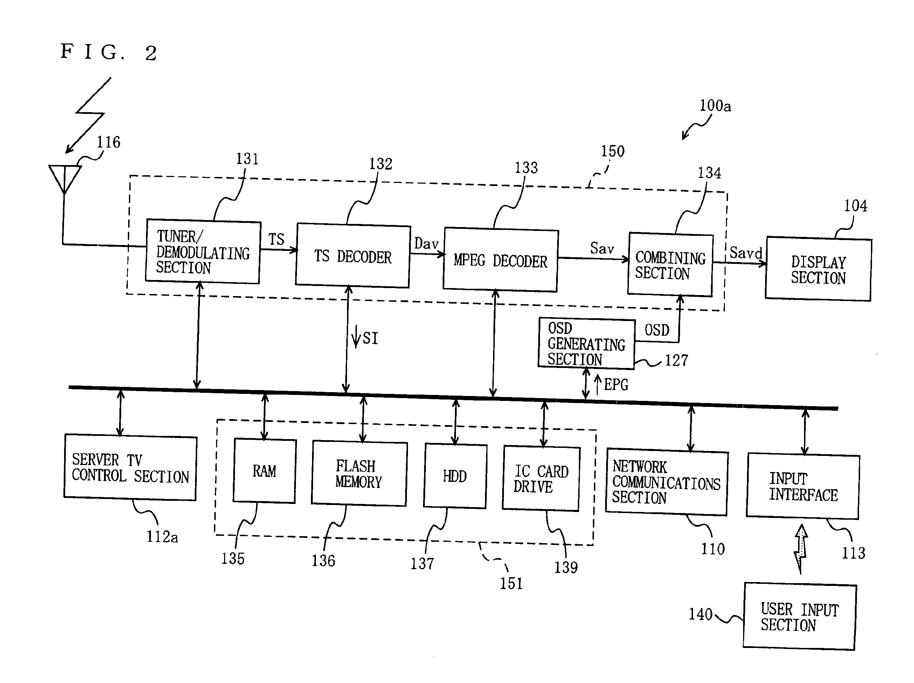

FIG. 2 illustrates a specific exemplary configuration of the server television 100a. Preferably, the server television 100a is roughly divided into the display section 104, the network communications section 110, an input interface 113, a server TV control section 112a, a television antenna 116, an OSD generating section 127, a television broadcast receiving section 150, and a recording section 151. The television broadcast receiving section 150 includes a tuner/demodulating section 131, a transport stream decoder (hereinafter abbreviated as "TS decoder") 132, an MPEG decoder 133, and a combining section 134. The recording section 151 includes a RAM 135, a flash memory 136, a hard disk drive (hereinafter abbreviated as "HDD") 137, and an IC card drive 139.

Digital broadcast waves transmitted from the broadcast station 310, have been received via the television antenna 116, are input to the television broadcast receiving section 150. The digital broadcast waves input to the television broadcast receiving section 150 are initially converted into a transport stream (hereinafter abbreviated as "TS") by the tuner/demodulating section 131. The TS decoder 132 decodes the TS output by the tuner/demodulating section 131 to extract and output a video/audio stream Dav and show information SI.

The MPEG decoder 133 MPEG-decodes the video/audio stream Dav output from the TS decoder 132 to generate a video/audio signal Sav.

The show information SI output from the TS decoder 132 is decoded by the server TV control section 112a composed of a microprocesser (MPU) to generate EPG data. The EPG generated by the server TV control section 112a is converted into on-screen display data OSD by the OSD generating section 127. The on-screen display data OSD is combined with the video/audio stream Sav output from the MPEG decoder 133 by the combining section 134 to output a display signal Savd. Based on the display signal Savd, the display section 104 adds an on-screen display to video/audio provided by a received digital broadcast, and displays the result to the user.

In the recording section 151, the flash memory 136 stores a show for operating the server TV control section 112a. The RAM 135 is used as a main memory when the server TV control section 112a is operated. The IC card drive 139 performs a read/write operation with respect to a B-CAS card for billing. The HDD 137 is mainly used to record a view-programmed show.

The network communications section 110 connects the server television 100a to the network 320, and enables exchange of a mail M with respect to the mobile terminal 200a connected to the network 320.

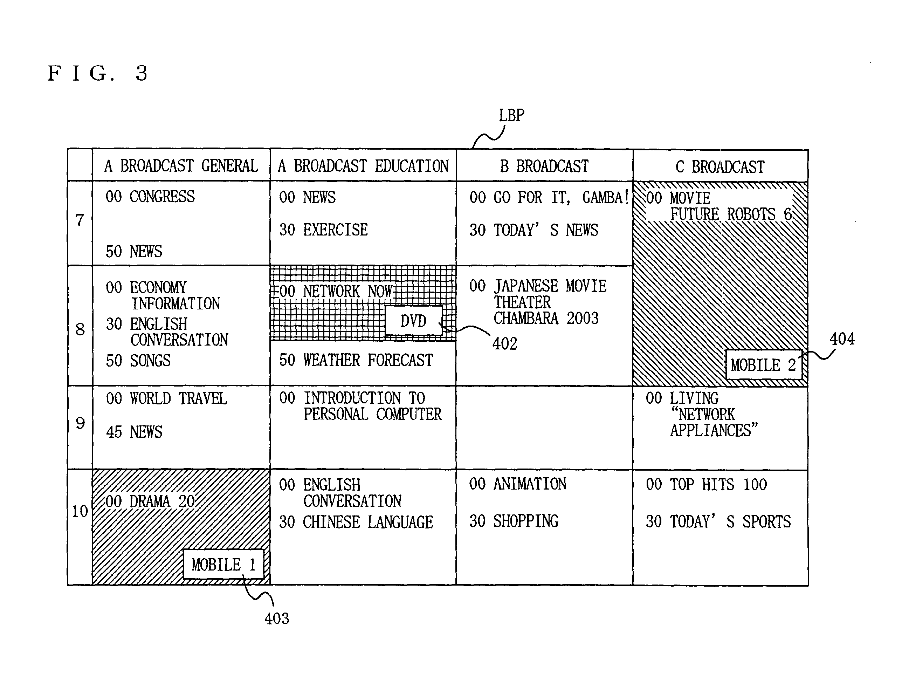

An exemplary display on the display section 104 of the show information IBP created based on the EPG extracted from digital broadcast waves and a view programming operation performed by the user will be described with reference to FIG. 3. Note that, in FIG. 3, displays "DVD", "mobile 1", and "mobile 2" indicated by reference numerals 402, 403, and 404, respectively, are so-called icons which are displayed, depending on a programming operation performed by the user, and these will be described below. Specifically, in the example of FIG. 3, portions excluding these icons are based on the show information IBP, and constitute a show table LBP displayed on the display section 104.

Specifically, the show information IBP is presented as the show table LBP, which is in the form of a show table represented by a "radio and television column" in newspaper. Specifically, in the show table LBP of FIG. 3, the leftmost vertical column indicates broadcast time zones in which shows are transmitted, and four neighboring vertical columns indicate broadcast stations which transmit shows.

Specifically, four different broadcast stations are represented by "A broadcast general", "A broadcast education", "B broadcast", and "C broadcast". Also in the show table LBP, a show which is transmitted by each broadcast station in each time is specified in a vertical column indicating a broadcast station and a horizontal row indicating a broadcast time zone.

When the user programs a show which the user wants to view, the user uses a cursor and an enter key of a remote controller (user input section 140) to select a desired show from the show table LBP. In this case, the electronic mail addresses of the plurality of receiving terminals 200a, which are targeted by a view programming, are previously recorded in the server TV 100a (digital broadcast receiving television) so that it is possible to designate a receiving terminal 200a for each programmed show.

The show selection is transferred via the input interface 113, such as, for example, a receiving section of a remote controller or the like, to the server TV control section 112a. The server TV control section 112a reflects the show selection on the show table LBP indicating the show information IBP.

In this example, the situation that view programmings have been performed with respect to the receiving terminals 200a by the server television 100a, is reflected on show table LBP. As receiving terminals 200a, a DVD recorder as well as the mobile terminal 200a are used. In other words, in this example, the user is in an environment that the user can use at least one server television 100a, two mobile terminals 200a, and one DVD recorder.

For the sake of simplicity, the two mobile terminals 200a are assumed to be identified as a mobile terminal 200a_1 and a mobile terminal 200a_2. The mobile-1 icon 403 and the mobile-2 icon 404 reflected on the show table LBP correspond to the mobile terminal 200a_1 and the mobileterminal 200a_2, respectively. The DVD icon 402 corresponds to the DVD recorder which is used as the receiving terminal 200a, as is similar to the mobile terminal 200a.

In the server television 100a, the show table LBP is used to perform a view programming in a manner similar to when a recording programming is performed in a recording apparatus, such as an ordinary DVD recorder or the like. For example, in order to identify each programming executing apparatus, show information fields are highlighted using a pattern, a color, or the like. Note that, in the show table LBP of FIG. 3, hatched areas indicate shows selected by the user. Further, types of hatching indicating selected shows are used to distinguish receiving terminals 200a which are selected to perform a view programming, from each other.

Specifically, for the mobile terminal 200a_1, a show called "Drama 20" which is to be broadcast by the "A broadcast general" broadcast station from 10:00 to 11:00 is programmed (selected) . For the DVD recorder, a show called "Network NOW" which is to be broadcast by the "A broadcast education" broadcast station from 8:00 to 8:50 is programmed (selected). For the mobile terminal 200a_2, a show called "Movie, Future Robots 6" which is to be broadcast by the "C broadcast" broadcast station from 7 : 00 to 9:00 is programmed (selected).

Considering the case where a plurality of receiving terminals 200a are programmed with respect to the same show, characters or icons (identification displays using graphics) are used so that the receiving terminals 200a for which programming is performed can be easily identified. By identifying programmed shows and targeted receiving terminals 200a in this manner, operability required for a view programming is improved.

As described above, it is indicated that the server television 100a is programmed so that the DVD recorder is to record the show "Network NOW" highlighted and indicated with the DVD icon 402. It is also indicated that the server television 100a is programmed so that the mobile terminal 200a_1 is to be used for the user to view the show "Drama 20" highlighted and indicated with the mobile-1 icon 403.

Note that, when there are three or more mobile terminals 200a, icons corresponding to mobile terminals 200a may be additionally registered as required (e.g., "mobile 3", "mobile 4", etc.). Note that the electronic mail addresses of a plurality of mobile terminals200a (receiving terminals 200a) are registered using a remote controller while a registration screen is displayed on the display section 104 of the server television 100a.

Specifically, in the example of FIG. 3, the mobile-1 icon 403 indicates that a view programming is established so that the mobile terminal 200a 1 is to be used to view or record the show "Drama 20" which is to be broadcast by the "A broadcast general" station from 10:00. Similarly, the mobile-2 icon 404 indicates that a view programming is established so that the mobile terminal 200a_2 is to be used to view or record the show "Movie, Future Robots 6" which is to be broadcast by the "C broadcast" station from 7:00 to 9:00. The DVD icon 402 indicates that a view programming is established so that the DVD recorder 200a is to be used to record the show "Network NOW" which is to be broadcast by the "A broadcast education" station from 8:00 to 8:50.

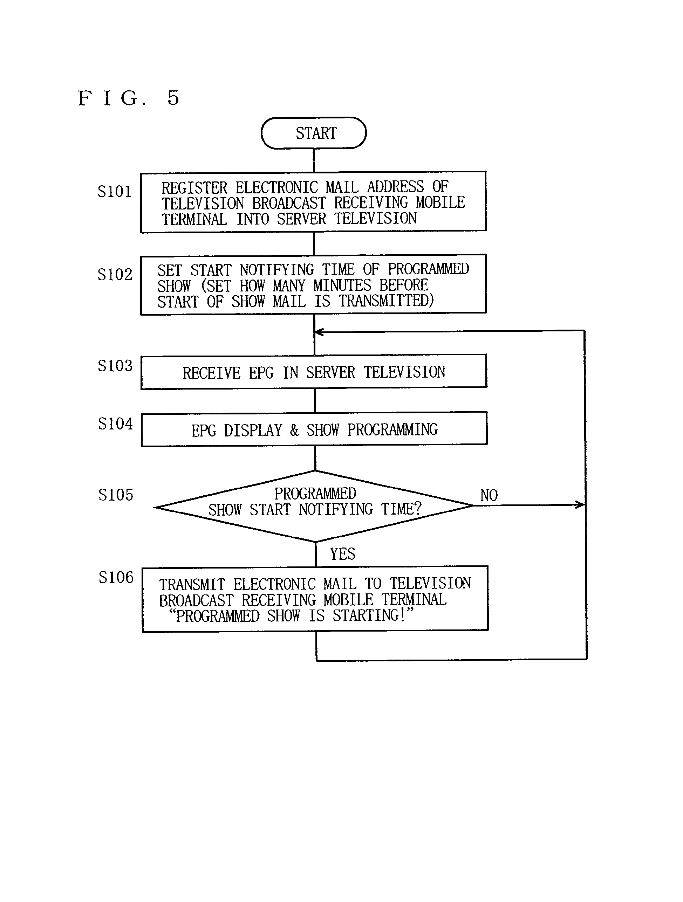

Note that these view programmings are different from the above-described conventional timer programming in which the hardware switches of the mobile terminal 200a_1, the mobile terminal 200a_2 , and the DVD recorder 200a are turned on/off. This will be described in detail below mainly with reference to a flowchart illustrated in FIG. 5.

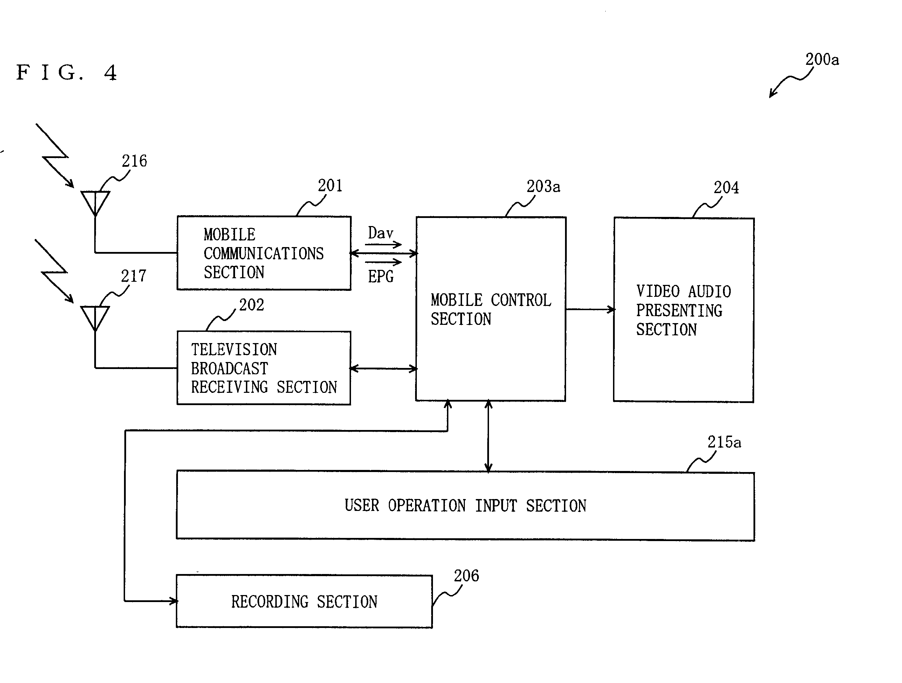

Next, FIG. 4 illustrates a configuration of the mobile terminal 200a. The receiving terminal 200a includes the mobile communications section 201, a television broadcast receiving section 202, a mobile control section 203a, a video audio presenting section 204, a recording section 206, a user operation input section 215a, a mobile telephone antenna 216, and a television antenna 217. The mobile communications section 201 communicates with the external network 320 via the mobile telephone antenna 216 which provides a communications function of the mobile terminal 200a.

The television broadcast receiving section 202 extracts a video/audio stream Dav from digital broadcast waves received by the television antenna 217. When the received digital broadcast waves contain additional information, such as EPG data or the like, the additional information is also decoded and output as EPG.

The mobile control section 203a controls operations of the whole mobile terminal 200a, including a presentation control, a control of an operation key input operation performed by the user, a control of determining whether a television is viewed or a mobile terminal is used, and the like. The video audio presenting section 204 presents video or audio to the user based on a signal processed by the mobile control section 203a.

The recording section 206 records the received digital broadcast waves or information obtained via the network 320. Note that the information recorded in the recording section 206 includes a programmed show, and a mail transferred with respect to the server television 100a. As the recording section 206, not only a large-capacity recording apparatus, such as a hard disk or the like, but also a small-capacity recording apparatus, such as a memory card or the like, can be used. The small-capacity recording apparatus is preferably used to record a small-size and simple image which is transmitted as a supplement for a mobile terminal in the case of ground wave digital broadcast.

Note that an operation of the television broadcast receiving section 202 is similar to that of the television broadcast receiving section 150 of the server television which has been described with reference to FIG. 2.

Next, a view programming performed by the server television 100a (view programming) in the view programming system PRA1 will be described with reference to the flowchart of FIG. 5.

Initially, in step S101, in response to an operation performed by the user, the electronic mail addresses of all receiving terminals 200a (mobile terminals 200a) that the user can use for a view programming are registered into the server television 100a. Thus, all show receiving apparatuses and show recording apparatuses that can be used by the user are set as view programming control targets. The control goes to the next step S102.

In step S102, in response to an operation of the user, a start notifying time Tm of a programmed show is set in the server television 100a. The start notifying time Tm mainly refers to a time at which the show start notifying mail Ms which is an electronic mail for notifying the contents of a view programming is transmitted to a view-programmed mobile terminal 200a before a broadcast start time Tb of the programmed show. In other words, the show start notifying mail Ms contains view-programmed show information IRP which is information regarding at least one show in the above-described view programming information IRA.

However, the broadcast start times Tb of recording-programmed programs are different from each other. Therefore, specifically, a predetermined time Pn is set which is earlier than the broadcast start time Tb of a programmed show.

Therefore, a time at which the show start notifying mail Ms is transmitted is the same as the start notifying time Tm, and is newly called an electronic mail transmitting time Tm. The electronic mail transmitting time Tm is set as a time which is earlier by the predetermined time Pn than the broadcast start time Tb. In this meaning, the predetermined time Pn is called an advance-notice time Pn.

The advance-notice time Pn is set to be a time sufficient to instruct viewing or recording with respect to the mobile terminal 200a view-programmed by the user after the user is provided with an advance notice of start of a view-programmed show. Thereafter, the control goes to the next step S103.

In step S103, in the server television 100a, EPG is extracted from the received digital broadcast waves. Thus, information about shows which can be viewed by the user is grabbed into the view programming apparatus 100a. Thereafter, the control goes to step S104.

In step S104, the show information IBP illustrated in FIG. 3 is presented on the display section 104 of the server television 100a so that the user is prompted to enter a view programming. Thereafter, after a predetermined time Pi has elapsed, the control goes to the next step S105. Note that, in this step, when a view programming is performed during the predetermined time Pi, the electronic mail transmitting time Tm is automatically determined based on the advance-notice time Pn set in step S102 and the broadcast start time Tb of the programmed show. On the other hand, when a view programming is not performed, the electronic mail transmitting time Tm is not determined.

In step S105, a current time Tc indicated by an internal clock of the server television 100a is compared with the electronic mail transmitting time Tmdetermined in step S104 . When the current time Tc is equal to the electronic mail transmitting time Tm, the control goes to the next step S106.

In step S106, the show start notifying mail Ms notifying of a view programming corresponding to the electronic mail transmitting time Tm is created and transmitted to the mail address of a corresponding mobile terminal 200a. In the show start notifying mail Ms, a message indicating that broadcast of a programmed show is starting soon, is described.

Such a message may include, for example, a statement "programmed show is starting! " or the like. Thereafter, the control returns to the above-described step S103. After a latest EPG is obtained, the show information IBP based on the EPG is presented in step S104, and the user is prompted again to perform a view programming operation. Thereafter, after the predetermined time Pi has elapsed, the processes of the above-described steps S105 and S106 are repeated.

As described above, the user uses the server television 100a to program a plurality of shows with respect to a plurality of receiving terminals 200a, and transmits electronic mails indicating the start of the programmed shows to the respective programmed receiving terminals 200a.

In this meaning, it is desirable that the predetermined time Pi be as short as the resource of the server television 100a permits. The predetermined time Pi is set to be shorter than the advance-notice time Pn at the longest.

In each mobile terminal 200a which has received an electronic mail transmitted in step S106, the user can know that broadcast of a show view-programmed by the server television 100a is starting soon, according to a message that "programmed show is starting! ". Therefore, it is possible to avoid a situation that the user is not aware of the start of a programmed show and fails to view the show as in conventional view programmings.

In other words, in the view programming system PRA1 of this embodiment, a view programming can be performed with respect to a mobile terminal 200a based on EPG in the server television 100a. Therefore, it is possible to prevent the user from failing to view a show which the user wants to view, even on the road.

Note that, assuming that a programmed show is a pay broadcast, at the time when the user starts viewing the show using a mobile terminal 200a, a billing system connected to the network 320 performs reception determination of the pay broadcast, and performs billing using a B-CAS card loaded in the IC card drive 139. Thus, billing is performed with respect to a mobile terminal 200a which is actually used to view a programmed show, so that there is no problem with billing of a pay broadcast.

Note that the contents of transmitted electronic mails are not all fixed, or may be previously set. Alternatively, an electronic mail may be input for each show when a view programming is performed. Alternatively,an electronic mailmay be previously set for each mobile terminal 200a.

With such a configuration, for example, when the electronic mail is transmitted to a mobile terminal 200a which is managed by a second user who is different from a first user who manages the view programming apparatus 100a, a message most suitable to the other end, such as "Miss Hanako, please view a show entitled 'Hot Springs in Tottori' which will be broadcast at 9:00 pm in Channel 8. FromTaro", can be transmitted with timing most suitable for start of viewing.

In this message, "Taro" is the first user who actually performed a view programming, while "Hanako" is the second user who did not perform the view programming.

Thus, even in the case where a mobile terminal 200a is managed by the second user, if the electronic mail address of the mobile terminal 200a is known, the first user can perform a view programming in association with the address.

Although a show view programming performed by a television set which can receive digital broadcast has been described in this embodiment, EPG may be obtained from an EPG contents supplier via the Internet using a personal computer.

Specifically, the personal computer has at least functions corresponding to the network communications section 110, the server TV control section 112a, the OSD generating section 127, and the user input section 140 of the server television 100a of FIG. 2. The personal computer uses the EPG obtained via the Internet to perform a view programming, and notifies a mobile terminal 200a which is to perform show viewing/recording, via an electronic mail, of the start of a broadcast before a programmed show is started.

Note that, assuming that a mobile terminal 200a has a recording function, when it is difficult to view a programmed show in the mobile terminal 200a, the user can record the show and reproduce the show later, thereby making it possible to prevent the user from failing to view the programmed show.

As described above, programming input can be comfortably operated using the stationary server television 100a having a large display screen, or the like. On the other hand, on the road, by performing a minimum operation with respect to the show start notifying mail Ms, a show can be easily displayed or recorded in a mobile terminal 200a without an uncomfortable input operation in the mobile terminal 200a having a small display section, and in addition, recording can be easily performed in the server television 100a.

As described above, in conventional timer programming, when broadcast of a programmed show is started, a programmed show receiving apparatus or show recording apparatus is automatically switched to start reception, display, or recording irrespective a user's view environment, i.e., ignoring user's convenience or intentionatthattime. Bycontrast, in the view programming system PRA1 of this embodiment, a method for viewing a view-programmed show is determined to fit a user's view environment or convenience, and the user can view the show using the determined method.

Also in the view programming system PRA1 of this embodiment, not only the server television 100a, which is represented by a digital broadcast receiver, but also a personal computer can be applied as a view programming apparatus. The same is true of other embodiments described below.

### (Second embodiment)

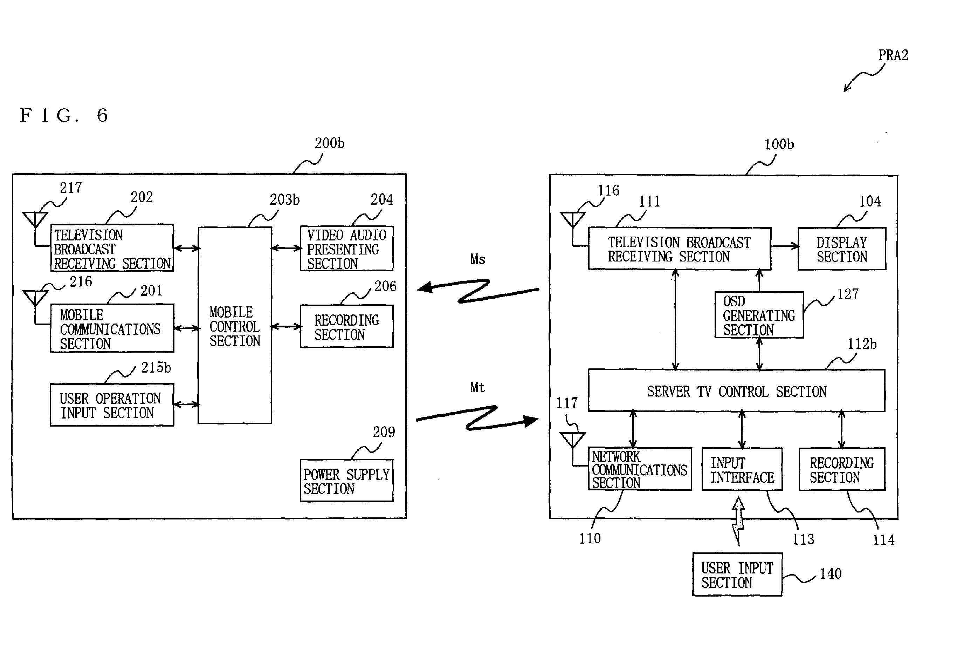

Hereinafter, a view programming system according to a second embodiment of the present invention will be described with reference to FIGS. 6, 7, 8, and 9. Note that the view programming system PRA2 of this embodiment is different from the view programming system PRA1 of FIG. 1 in that the server television 100a and the mobile terminal 200a are replaced with a server television 100b and a mobile terminal 200b.

Configurations of the server television 100b and the mobile terminal 200b will be described with reference to FIG. 6. As illustrated in FIG. 6, the server television 100b includes a display section 104, a network communications section 110, a television broadcast receiving section 111, a server TV control section 112b, an input interface 113, a recording section 114, an OSD generating section 127, and a user input section 140. The server television 100b receives an electronic mail M transmitted from a mobile terminal 200b via the network communications section 110, or transmits a show start notifying mail M to the mobile terminal 200b. Note that, in FIG. 6, as electronic mails M, the above-described show start notifyingmail Ms and a new notification acknowledgement mail Mt are illustrated, which will be described below.

The television broadcast receiving section 111 outputs a video signal and an audio signal from television broadcast waves received by the television antenna 116. Note that the television broadcast receiving section 111 corresponds to the television broadcast receiving section 150 of FIG. 2, and may be either of an analog type or of a digital type in this embodiment.

The server TV control section 112b controls each component of the server television 100 and controls reception, display, or recording of a show, and transmits the contents of a viewprogramming entered by the user, as the show start notifying mail Ms, to the mobile terminal 200b. Depending on the presence or absence of the notification acknowledgement mail Mt returned by the mobile terminal 200b with respect to the show start notifying mail Ms, it is determined whether or not a television received signal is to be recorded.

Timer viewing information IRA which indicates a show which the user wants to view is input using the user input section 140, and is transferred via the input interface 113 to the server TV control section 112b. The recording section 114 records the television received signal into a recording medium, such as a memory, an HDD, or the like, in accordance with an instruction from at least the server TV control section 112b, and corresponds to the recording section 151 of FIG. 2.

An operation of the server television 100b thus configured will be described. The server television 100b is basically similar to the above-described server television 100a, and isolates or extracts EPG information from additional information included in a television broadcast received by the television broadcast receiving section 111, or obtains it via a network. The user performs a view programming via the input interface 113, based on the show information IBP, to generate view programming information IRA.

In this case, the user stores the mail address of the mobile terminal 200b in association with the view programming information IRA. An electronic mail transmitting time Tm notifying of the start of broadcast of a programmed show is set with respect to the server television 100b. At the electronic mail transmitting time Tm, the show start notifying mail Ms indicating the start of a view-programmed show (programmed show) is transmitted to the mobile terminal 200b.

The mobile terminal 200b includes a mobile communications section 201, a television broadcast receiving section 202, a mobile control section 203b, a video audio presenting section 204, a recording section 206, a power supply 209, a user operation input section 215b, a television antenna 217, and a mobile telephone antenna 216. The mobile terminal 200b receives the show start notifying mail Ms from the server television 100b via the mobile communications section 201, and based on a user's instruction, returns the notification acknowledgement mail Mt to the server television 100b.

The television broadcast receiving section 202 receives television broadcast waves and outputs a video signal and an audio signal. Note that, in this embodiment, the television broadcast receiving section 202 may be either of an analog type or a digital type.

The mobile control section 203b analyzes the show start notifying mail Ms received from the server television 100b in accordance with a predetermined protocol,extractsprogrammedshow information IRP, controls a user's operation, and controls recording of a television received signal, displaying a screen, transmission of a return mail, and the like.

The video audio presenting section 204 receives a video signal and an audio signal from the mobile control section 203b, and reproduces video on a screen and audio from a loudspeaker based on the signals. The recording section 206 records a television received signal into a recording medium (component), such as a memory, an HDD, or the like, in accordance with an instruction from the mobile control section 203b.

The power supply 209 uses a battery or the like to supply power for operating the mobile terminal 200b. The user operation input section 215b detects data entered by a button operation or the like which is performed by the user. The television antenna 217 receives television broadcast waves. The mobile telephone antenna 216 transmits/receives radio waves of a mobile telephone.

An operation of the mobile terminal 200b thus configured will be described. At the electronic mail transmitting time Tm indicating the start of a programmed show, the show start notifying mail Ms is transmitted from the server television 100b to the mobile terminal 200b, for example, on the road.

In the first embodiment, the user who has received the show start notifying mail Ms knows that broadcast of a programmed show is starting soon, by the electronic mail, and can view the programmed show using a mobile terminal 200b at his/her hand without failing to view the show. Depending on user's convenience, the show may be recorded into a recording section 6 which is built in the mobile terminal 200b, and the user may view the show at another time.

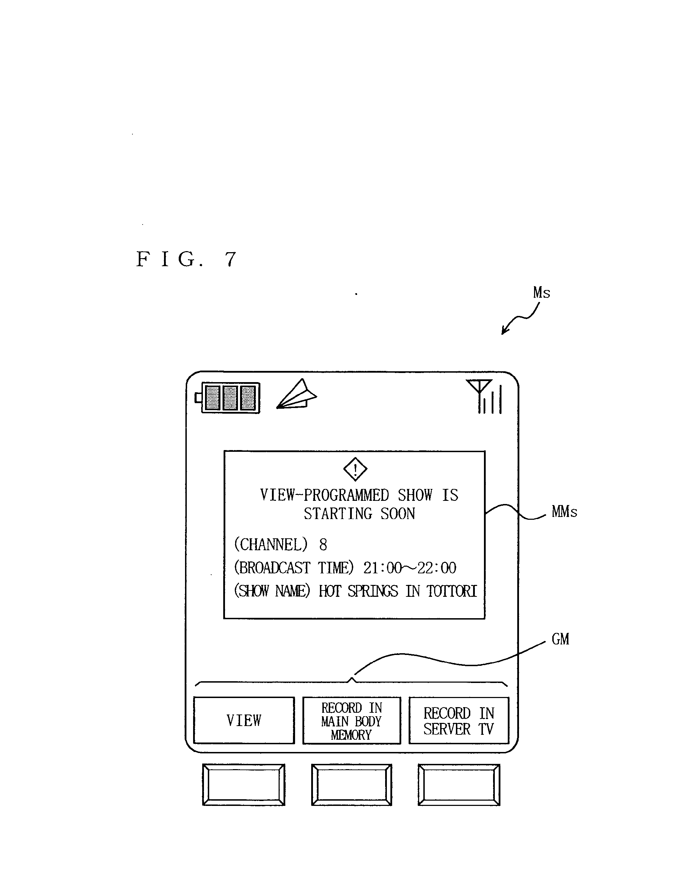

FIG. 7 illustrates an exemplary screen which is displayed on the video audio presenting section 204 based on the show start notifying mail Ms in this embodiment. At a center portion of the screen, a show start notifying message MMs contained in the show start notifyingmail Ms is displayed, and at a lower portion thereof, a view form message group GM generated by the mobile terminal 200b (the mobile control section 203b) is displayed. The show start notifying message MMs contains a statement that "programmed show is starting soon", and in addition, the programmed show information IRP indicating a view-programmed show as described above.

The programmed show information IRP may be composed of, for example, a channel number, a broadcast time, and a show name which are programmed in a view programming. In this case, the user who has received the show start notifying mail Ms can perform an operation of viewing or recording a show with certainty.

Since the show start notifying mail Ms is an electronic mail which notifies the mobile terminal 200b of the start of a view-programmed show, the server television 100b may not create a message which can be directly viewed by the user as in FIG. 7, and instead, may set a predetermined protocol and transmit data complying with the protocol, and the mobile terminal 200b may reference to the data and create a message which notifies the user of the start of a programmed show (the show start notifying message MMs) .

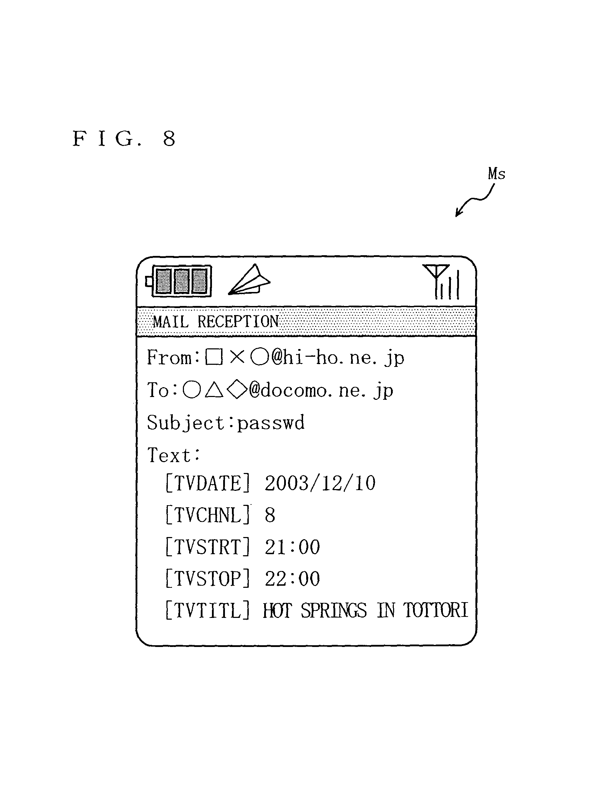

From this viewpoint, the programmed show information IRP contained in the show start notifying mail Ms may have a data structure as illustrated in FIG. 8. Specifically, the show start notifying mail Ms having the programmed show information IRP with such a data structure is created in the server TV control section 112b of the server television 100b, and is transmitted from the network communications section 110 to the mobile terminal 200b.

Details of the data structure will be described. The mail address of a source (sender) is set to be the mail address of the server television 100b. The mail address of a destination (receiver) is set to be the mail address of the other side which is notified of the start of a programmed show, i.e., the mobile terminal 200b in this embodiment. These settings are typical in electronic mails. The mail address corresponds to an ID of the mobile terminal 200b in the case of the message transmission/reception.

Next, a password is set with respect to "Subject (subject of an electronic mail)". The password is previously set so as to identify data which is transferred between the server television 100b and the mobile terminal 200b in the view programming system PRA2 regarding a view programming.

Therefore, the password may be specific to each mobile terminal 200b. Preferably, a previously set password is recorded in the "Subject", corresponding to the ID of each mobile terminal 200b. The ID of each mobile terminal 200b may be simply used as a password.

Note that "Subject" may not be simply used directly as a password, and information for identifying each mail may be added to a password. Specifically, in "Subject", a password is used not only to determine whether or not a mail M (including the show start notifying mail Ms and the notification acknowledgement mail, Mt) transferred between the server television 100b and the mobile terminal 200b is authenticated, but also to identify each mail M.

Assuming that a password is, for example, "ABCDE", date information may be attached, following the password (e.g., "ABCDE_JUN23", or a serial number may be attached (e.g., "ABCDE001"). However, in the case of the formermethod of attaching date information, if a plurality of show start notifying mails Ms are transmitted to the same mobile terminal 200b on the same date, the show start notifying mail Ms cannot be distinguished from each other.

On the other hand, in the case of the latter method of attaching a serial number, the show start notifying mails Ms can be separately identified and managed. If management information is added to amobile terminal-specificpassword, a created show start notifying mail Ms and response mail Mt can be easily managed.

The mail address of the server television 100b, and the mail address and serial number of the mobile terminal 200b can be used as passwords.

In a text portion of the main body of a mail, a "programmed view date", a "view channel", a "view start time", a "view end time", and a "viewed show name" are described as data based on a predetermined definition. For example, the "programmed view date" is described in the form of "year/month/day", following a description [TVDATE] as an identifier. The "view channel" is described using a channel number, following a description [TVCHNL] as an identifier.

The "view start time" is described in the form of "hour:minute" (e.g., "21:00"), following a description [TVSTRT] as an identifier. The "view end time" is also described in the form of "hour:minute" (e.g., "22:00"), following a description [TVSTOP] as an identifier. The "viewed show name" (title) is described using characters, following a description [TVTITL] as an identifier.

Note that the displays "view", "record into main body memory", and "record in server television" contained in the view formmessage group GM, are added by the server television 100b in response to the show start notifying mail Ms.

The mobile terminal 200b which has received the show start notifying mail Ms thus configured, is operated as follows.

The mobile communications section 201 of FIG. 6 receives the show start notifying mail Ms, and the data is transferred to the mobile control section 203b. The mobile control section 203b analyzes the contents of the received show start notifying mail Ms in accordance with a predetermined protocol. In this case, information contained in the "Subject" data is compared with a previously set password in the mobile terminal 200b (e.g., in the mobile control section 203b). When these are different from each other, it is determined that an ordinary electronic mail M has been received, and the contents of the electronic mail is displayed via the video audio presenting section 204 in accordance with a user's instruction indicating that the user views the electronic mail.

When there is a match therebetween, it is determined that a show start notifying mail Ms notifying of the start of a programmed show has been received from the server television 100b having a mail address recorded in the source (sender). Therefore, a programmed view date, a view channel, a view start time, a view end time, and a viewed show name are obtained as programming information from the text portion of the main body of the mail based on the predetermined definition. Thereafter, the show start notifying message MMs and the view form message group GM of FIG. 7 are created, and are presented via the video audio presenting section 204, so that the user is notified that the programmed show is starting soon in the server television 100b.

Note that the view form message group GM displays instruction items which can be selected by the user with respect to the show start notifying message MMs so as to prompt the user to issue the next instruction. Input buttons corresponding to "view", "store into main body memory", and "record in server TV" of the view form message group GM are set.

When receiving the show start notifying mail Ms, the user presses down a button indicating that "view" if the user views a programmed show, on the spot, using the mobile terminal 200b. The button is a component of the user operation input section 215b, and a user's instruction operation is transferred to the mobile control section 203b.

The mobile control section 203b ends the display (FIG. 7) indicating that a programmed show is starting soon, controls the television broadcast receiving section 202 based on data (a view channel, etc.) obtained by analyzing the show start notifying mail Ms in accordance with the predetermined protocol, and the user' s "view" button operation, to obtain received data of a television broadcast, and controls so that the contents of the show in the received data are presented to the user via a video/audio section 204.

On the other hand, if the user does not view the show on the spot, and wants to record the programmed show in order to, for example, view the show later, the user presses down a button corresponding to the display indicating that "store into main body memory". The instruction to store the show into a main body memory (the recording section 206) is transferred from the user operation input section 215bb to the mobile control section 203b.

The mobile control section 203b ends the display indicating that a programmed show is starting soon, controls the television broadcast receiving section 202 based on data (a view channel, etc.) obtained by analyzing the show start notifying mail Ms in accordance with the predetermined protocol to obtain received data of a television broadcast, and writes and records the received data into the storing section 206.

As described above, when the user instructs a process in the mobile terminal 200b (viewing of a show, recording of a show, etc.) regarding a programmed show, the mobile control section 203b creates the notification acknowledgement mail Mt which is a return mail with respect to the show start notifying mail Ms transmitted from the server television 100b, in addition to the above-described operations. Thereafter, the mobile control section 203b further transmits the notification acknowledgement mail Mt via the mobile communications section 201 to the server television 100b. Since the show start notifying mail Ms already contains a source (sender) and view programming information as data, if the original source (sender) is set as a new destination (receiver) and the address of the mobile terminal 200b is set as a new source (sender), the notification acknowledgement mail Mt can be transmitted using the above-described one button.

In this case, if a password for identifying data which is transferred between the server television 100b and the mobile terminal 200b is used without a change as "Subject (subject of an electronic mail)", or a header ("Re:", etc.) indicating a return mail is described, following the contents of the received "Subject", as "Subject (subject of an electronic mail)", the receiver-side server television 100b can distinguish this return mail from other electronic mails M.

In addition, if data (a programmed view date, a view channel, a view start time, a view end time, and a viewed show name) which is the contents of the original show start notifying mail Ms are described without a change in a text portion of a main body of the return mail, it is possible to determine to which of a plurality of show start notifying mails Ms already transmitted the notification acknowledgement mail Mt corresponds.

Alternatively, if information which can be used to identify each show start notifying mail Ms (represented by addition of a password and management information) is used as "Subject", it is possible to identify a show start notifying mail Ms and a mobile terminal 200b to which the show start notifying mail Ms was transmitted, by analyzing only the "Subject". This is because the server television 100b can also specify the contents of a view programming based on a password described in the show start notifying mail Ms.

Next, the case where the user receives the show start notifying mail Ms, does not view a programmed show, on the spot, using the mobile terminal 200b, and records the show in the server television 100b, will be described. In this case, the user presses down a button corresponding to the display indicating that "record in server TV". The instruction is transferred via the user operation input section 215b to the mobile control section 203b. In this case, the mobile control section 203b only controls so that the display (FIG. 7) indicating that a programmed show is starting soon is ended, and does not transmit the notification acknowledgement mail Mt.

The start notifying message display may be caused to disappear when a button indicating that "view" or "record into main body memory" leading to actual viewing or recording is pressed down. Specifically, assuming that user's convenience changes after the "record in server TV" button is pressed down, and the user wants to "view" or "record into main body memory", if the "start notifying message" is displayed, the user can view a programmed show using the mobile terminal 200b while the programmed show is recorded in the server television 100b. However, if the "start notifying message" has disappeared, the user cannot view the program. Note that, in this case, after the broadcast start time, the "start notifying message" may be caused to disappear, and the "record in server TV" is desirably selected.

As described above, in the view programming system PRA2 of this embodiment, there are the case where the notification acknowledgement mail for instructing the server television 100b to record is not transmitted, and the case where the user instructs the mobile terminal 200b to perform a process (viewing of a show, recording of a show, etc.) with respect to a programmed show, and the notification acknowledgement mail Mt used when recording is not performed in the server television 100b is not transmitted. Operations of the server television 100b will be described, dividing into these two cases.

After the show start notifying mail Ms is transmitted, the electronic mail M is checked at least until the notified end time of a view-programmed show. The check may be performed during an idling period between other control operations, or may be performed at predetermined time intervals in accordance with timer information (clock information). Note that, when the check is performed at predetermined time intervals, the time interval needs to be set to be less than or equal to a minimum time which is required to receive a notification acknowledgement mail Mt corresponding to a show start notifying mail Ms after transmission of the show start notifying mail Ms, in the server television 100b.

Note that, when an electronic mail is received by the network communications section 110, the server TV control section 112b checks the contents of the "Subject". When information in the "Subject" does not match a previously set password, it is determined that the electronic mail is an ordinary electronic mail, and an ordinary electronic mail process is performed. When the information in the "Subject" matches a password previously set with respect to the mobile terminal 200b, it is determined that the electronic mail is an electronic mail regarding a view programming, i.e., it is determined that the electronic mail is a show start notifying mail Ms.

Therefore, the contents of the text portion of the mail main body are examined. When the contents match the data of the transmitted show start notifying mail Ms, it is determined that a notification acknowledgement mail Mt corresponding to the show start notifying mail Ms has been transmitted. Note that, if passwords can identify respective mails, it can be determined, based on matching of a password, that an electronic mail is a notification acknowledgement mail Mt, as described above.

When the notification acknowledgement mail Mt is confirmed, the server TV control section 112b determines that a show is directly viewed using the mobile terminal 200b having the source (sender) address of the notification acknowledgement mail Mt, or the show is recorded in the mobile terminal 200b, i.e. , there is, at least, not an instruction to record the show in the server television 100b, and ends the operation of checking the notification acknowledgement mail.

However, when the notification acknowledgement mail Mt is not received before the start time of the notified programmed show (the broadcast start time Tb), it is determined that the user has instructed "record in server TV" or that the server television 100b needs to record the programmed show for some reason. In this case, the server TV control section 112b controls the television broadcast receiving section 111 based on the programmed show information IRP to obtain received data of a television broadcast, and records the received data into the storing section 114.

In other words, the notification acknowledgement mail Mt has a function of canceling an operation of recording a view-programmed show in the server television 100b. In this meaning, the notification acknowledgement mail Mt can be called a cancel mail.

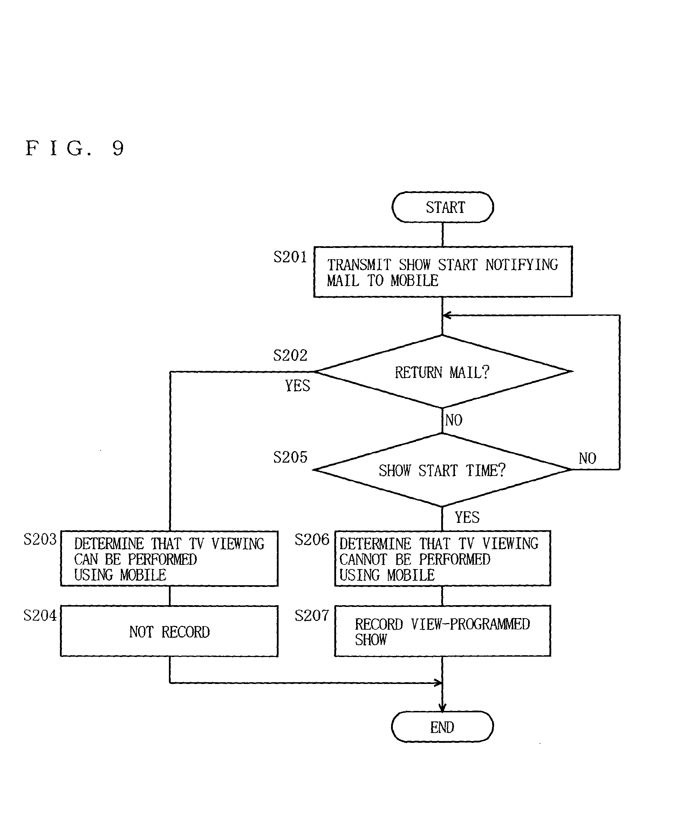

Next, an operation of the server television 100b will be described with reference to a flowchart of FIG. 9.

In step S201,in the server television 100b, at a time earlier by a predetermined time than the broadcast start time Tb of a programmed show, the server television 100b transmits a show start notifying mail Ms to the mobile terminal 200b. Thereafter, the control goes to step S202.

In step S202, the server television 100b, which has transmitted the show start notifying mail Ms, checks the presence or absence of reception of a notification acknowledgement mail Mt from the mobile terminal 200b. When the notification acknowledgement mail Mt has been received, the control goes to step S203.

In step S203, it is determined that a process (viewing of the show, recording of the show, etc.) is supposed to be performed in the mobile terminal 200b. In other words, the reception of the notification acknowledgement mail Mt is considered to indicate that the user cancels recording in the server television 100b. Thereafter, the control goes to step S204.

In step S204, in the server television 100b, the show indicated by the show start notifying mail Ms is not recorded, and the process is ended.

On the other hand, when it is determined in the above-described step S202 that the notification acknowledgement mail Mt has not been received, the control goes to step S205.

In step S205, it is determined whether or not a current time Tc is equal to the broadcast start time Tb. In the case of NO, i.e., when the current time Tc has not yet reached the broadcast start time Tb, the control returns to step S202, and the above-described determination is repeated. Specifically, when the notification acknowledgement mail Mt has not been received by the broadcast start time Tb, the control goes to the next step S206.

In step S206, it is determined either that the user has instructed that "record in server TV" in the mobile terminal 200b, or that the notification acknowledgement mail Mt indicating cancellation of recording of a view-programmed show in the server television 100b cannot be transmitted. In the former case, it is considered that the user indicates a user' s intention that the user is in a state which enables the user to view the view-programmed show.

On the other hand, in the latter case, there is a possibility that the user is not in a state which enables the user to transmit the notification acknowledgement mail Mt to indicate such a user' s intention. Therefore, in either case, it is determined that the user is in an environment that the user cannot view the view-programmed show using the mobile terminal 200b. Note that, even if the user is in an environment which enables the user to view the view-programmed show, the user does not make an action when the user wants to record the show, so that the notification acknowledgement mail Mt is not transmitted. In this case, the show can be automatically recorded in the server television 100b. Thereafter, the control goes to step S207.

In step S207, the server TV control section 112b of the server television 100b controls the television broadcast receiving section 111 based on the programmed show information IRP to obtain received data of a television broadcast, and records the received data into the storing section 114. Thereafter, the process is ended.

As described above, in the view programming system PRA2, a risk of the user failing to view a programmed show can be significantly reduced by transmission of the programmed show information IRP and reception confirmation of the notification acknowledgement mail Mt using the show start notifying mail Ms. Specifically, the user is prompted to view a programmed show by the show start notifying mail Ms, so that the user is prevented from forgetting and failing to view the show on the road. Even if the user is not aware of the show start notifying mail Ms, the show is automatically recorded in the server TV, so that the user can view the show, though later.

Watching or recording of a programmed show and selection of the major recording body can be performed using the mobile terminal 200b even on the road, i.e., away from the view-programmed server television 100b. In addition, the view programming system PRA2 has the following effect.

Generally, the mobile terminal 200 may be outside a service area, depending on a place where the mobile terminal 200 is used, i.e. , the show start notifying mail Ms may not be received. Even assuming that the mobile terminal 200 is inside a service area, when the show start notifying mail Ms is transmitted from the server television 100b, the mobile terminal 200b may be powered off or in a manner mode or the like, so that the user is not aware of transmission of the electronic mail, or cannot view the electronic mail immediately after reception of the show start notifying mail Ms.

In such a case, even when the show start notifying mail Ms has been transmitted from the server television 100b to the mobile terminal 200b, the user may not be aware of the show start notifying mail Ms by the start time of the show. As a result, the mobile terminal 200b has not received the show start notifying mail Ms, or even if the mobile terminal 200b has received the show start notifying mail Ms, the user does not provide an instruction with respect to a notification that a programmed show is starting soon. Therefore, a notification acknowledgement mail is not transmitted with respect to the show start notifying mail Ms from the server television 100b. In such a situation, a show which the user wants to view needs to be recorded for the purpose of safety.

When the server television 100b cannot receive the notification acknowledgement mail Mt corresponding to the show start notifying mail Ms by the broadcast start time Tb, it is considered, as described above, that the user has provided an instruction "record in server TV", or a programmed show needs to be recorded into the server television 100b for some reason. In this case, the server TV control section 112b controls the television broadcast receiving section 111 based on the programmed show information IRP to obtain received data of a television broadcast, and records the received data into the storing section 114.

As described above, in this view programming system, even when the user is not aware of the show start notifying mail Ms and fails to view the show on the spot, the server television 100b records the show. Therefore, the user can newly reproduce and view the recorded contents using the server television 100b, or alternatively, the recorded data is additionally transferred to the mobile terminal 200b, so that the user can view the show using the mobile terminal 200b. Therefore, the user does not fail to view the programmed show.

Note that, in this embodiment, the case where there is one mobile terminal 200b has been described as an example. Even when there are a plurality of mobile terminals 200b, the server television 100b manages the mail address of each mobile terminal 200b, and sets a password for each mobile terminal 200b, thereby making it possible to obtain the above-described effect. The same is true of other embodiments.

Note that the programming function of the server television 100b may be separated as a programming input apparatus. The show start notifying mail Ms is transmitted to a programmed-recording apparatus (e.g., a DVD recorder, etc.) and the mobile terminal 200b, and the mobile terminal 200b returns a cancel mail for canceling recording of a view-programmed show (the notification acknowledgement mail Mt) to the programmed-recording apparatus, but not the programming input apparatus. When the programmed-recording apparatus does not receive the cancel mail (the notification acknowledgement mail Mt), the programmed-recording apparatus executes a programmed recording. This configuration has a similar effect.

Assuming that there are a plurality of mobile terminals 200b, when a programmed show may be recorded in the server television 100b in association with a password, a name set in the mobile terminal 200b, or the "Subject" of the transmitted show start notifying mail Ms. In this case, even if there are a number of shows which are managed by the server television 100b, the shows can be easily called and generated based on the information, such as a password or the like. Alternatively, when passwords are respective secret information, privacy management can be performed so that only a party which instructs recording of a show can call and generate the show.

Further, shows which are viewed or are subjected to a view programming or a timer recording, are not limited to television broadcasts transmitted from broadcast stations. For example, shows may be multi-cast video or audio contents which are distributed at a predetermined time on the Internet, and can be similarly processed in the view programming system PRA2. In this case, EPG may be obtained from a contents accumulating server, and addresses, such as URLs or the like, correspond to channels. Regarding the addresses, virtual channels may be provided between apparatuses in the view programming system PRA2, and the virtual channels may be associated with the addresses. The same is true of other embodiments.

In the above-described example, it has been described that the view programming information IRA indicating a show view-programmed in the server television 100b is transferred as the show start notifying mail Ms to the mobile terminal 200b, and the mobile terminal 200b records the view-programmed show based on the view programming information IRA. Alternatively, the show start notifying mail Ms may be transmitted from the server television 100b to the server television 100b itself, so that viewing or recording of the show is performed based on the view programming information IRA.

In this case, preferably, the server television 100b is configured to be freely carried by the user, as is similar to the mobile terminal 200b. In addition, the mobile terminal 200b may be configured to have the view programming function and the show start notifying mail Ms transmitting function of the server television 100b. In this case, a similar function is obtained.

### (Third embodiment)

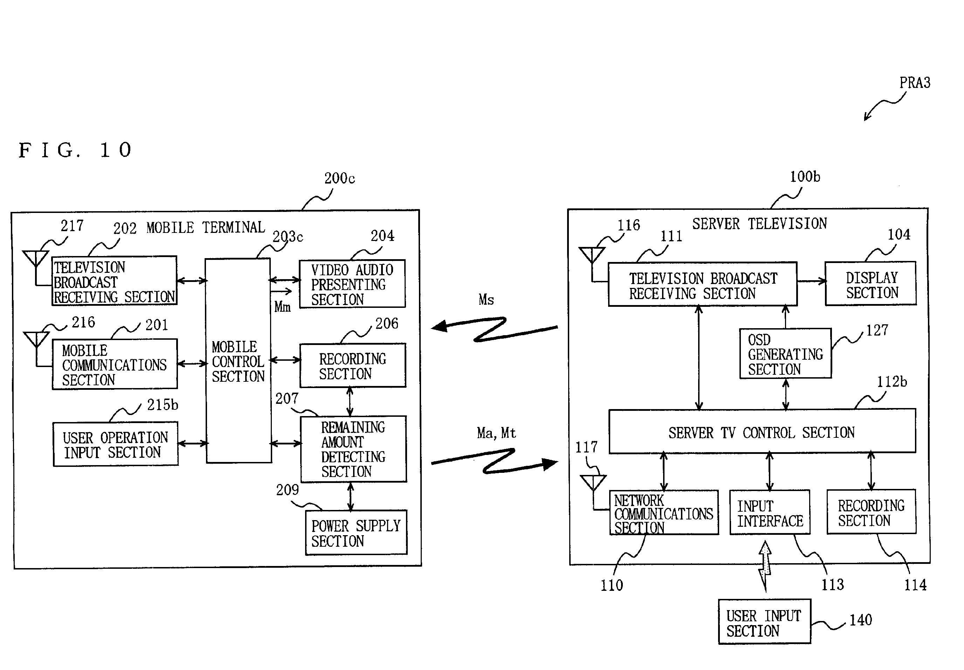

Next, a view programming system according to a third embodiment of the present invention will be described with reference to FIGS. 10, 11, and 12. As illustrated in FIG. 10, the view programming system PRA3 of this embodiment is different from the view programming system PRA2 of FIG. 6 in that the mobile terminal 200b is replaced with a mobile terminal 200c. In the mobile terminal 200c, the mobile control section 203b is replaced with a mobile control section 203c, and a remaining capacity detecting section 207 is newly provided. As a result, the mobile terminal 200c transmits a show information change mail Ma to the server television 100b in addition to the notification acknowledgement mail Mt.

The remaining capacity detecting section 207 detects a remaining recording capacity which can be used in the recording section 206 and a remaining capacity of a battery included in the power supply 209. The remaining capacity of the recording section 206 can be known by comparing a total memory amount and an amount of memory consumed which are managed by an OS which controls an operation program of the whole mobile terminal 200c. The remaining capacity of a battery can be known from, for example, a voltage drop amount of the battery with respect to an amount of current consumed.

Next, an operation of the mobile terminal 200c will be described. At an electronic mail transmitting time Tm which is earlier by an advance-notice time Pn than a broadcast start time Tb of a view-programmed show, the server television 100b transmits a show start notifying mail Ms. When the mobile terminal 200c is outside a service area or is powered off, the mobile terminal 200c cannot receive the show start notifying mail Ms, so that the notification acknowledgement mail Mt is not transmitted. In this case, the server television 100b starts recording of the show at the broadcast start time Tb.

When the mobile terminal 200c has received the show start notifying mail Ms, the mobile terminal 200c analyzes the contents of the show start notifying mail Ms in accordance with the predetermined protocol, and provides a display indicating that a programmed show is starting soon to notify the user. The operation which has been described so far is similar to that of the mobile terminal 200b.

Next, the mobile control section 203c calculates a broadcast duration of a show based on the broadcast start time Tb and the end time which are obtained by analyzing the contents of the show start notifying mail Ms, and obtains data of the remaining capacity of the battery from the remaining capacity detecting section 207. Based on the remaining battery capacity data, a maximum time for which the show can be viewed using the remaining capacity is calculated, and is compared with a time required for viewing the show (required view time) . When it is determined that the maximum time for which the show can be viewed using the remaining capacity is smaller than the required view time, the notification acknowledgement mail Mt is not transmitted, and a notification Mm including a message that, for example, "it's start time of view-programmed show, but remaining battery capacity is insufficient" and programmed show information IRP is provided to the user.

As a result, the server television 100b starts recording the show at the broadcast start time Tb. The user cannot view the programmed show on the spot. Nevertheless, the contents of the show are recorded in the server television 100b, thereby making it possible to prevent the user from failing to view the show.

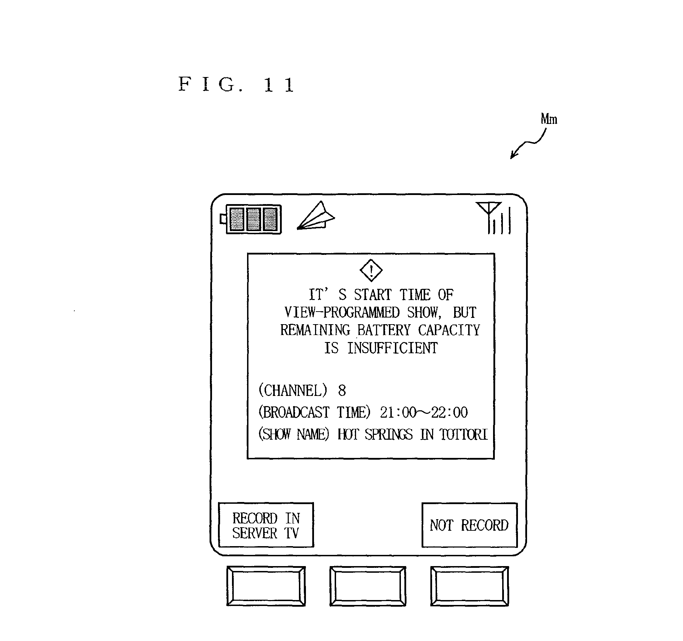

FIG. 11 illustrates an exemplary notification Mm provided when the remaining battery capacity is insufficient. A display of FIG. 11 may be provided as the notification Mm, and an operation may be determined based on a user's instruction. Specifically, the message that "it's start time of view-programmed show, but remaining battery capacity is insufficient" and the programmed show information IRP are displayed. At the same time, the mobile control section 203c provides a display for receiving the next user's instruction with respect to the message.

As an exemplary display, as illustrated in a lower portion of FIG. 11, instruction items which the user can provide in this case are displayed, including "record in server TV", "not record", and the like, corresponding to input buttons.

Here, if it is determined that recording is not performed in the server television 100b, the user presses down a button corresponding to the display "not record". The instruction is transferred to the mobile control section 203c, the mobile control section 203c ends the display of FIG. 11, and the notification acknowledgement mail Mt is transmitted via the mobile communications section 201 to the server television 100b. The server television 100b receives the notification acknowledgement mail Mt, and therefore, does not record the show.

When a show is recorded in the server television 100b, a button corresponding to the display indicating that "record in server TV" is pressed down. The instruction is transferred via the user operation input section 215b to the mobile control section 203c. The mobile control section 203c only controls to end the display of FIG. 11, and does not transmit the notification acknowledgement mail Mt. In this case, in the server television 100b, recording of the show is started at the broadcast start time Tb of the show.

As described above, even when a programmed show cannot be viewed due to an insufficient remaining battery capacity, a control of determining whether or not the show is recorded in the server television 100b can be performed only by controlling whether or not the notification acknowledgement mail Mt is transmitted. Therefore, viewing or recording is not interrupted due to a dead battery during viewing or recording, so that the user does not fail to view the view-programmed show.

In the mobile terminal 200c, the remaining capacity detecting section 207 detects a remaining capacity which can be used by the recording section 206. Even assuming that the show start notifying mail Ms is received, and in response to this, the user instructs recording, when the remaining capacity which can be used by the recording section 206 is smaller than a memory amount which is required to record a show, the remaining recording capacity of a recording medium (e.g., a memory card, an HDD, etc.) runs out, so that the show cannot be recorded. Therefore, the view programming system PRA3 of this embodiment is operated as follows.

The mobile terminal 200c receives the show start notifying mail Ms, analyzes the contents of the show start notifying mail Ms, provides a display indicating that a programmed show is starting soon to the user, and receives a user' s instruction (the show start notifying mail Ms) of FIG. 7, as is similar to the above-described view programming system PRA2 of the second embodiment.

Next, when the user selects "record into main body memory", the remaining capacity which can be used by the recording section 206, i.e., the remaining memory capacity data, is obtained. The mobile control section 203c also calculates a required view time from the broadcast start time Tb and the show end time which are obtained by analyzing the contents of the show start notifying mail Ms, and calculates a memory amount required to record the show. Thereafter, the remaining memory capacity data is compared with the memory amount required to record the show.

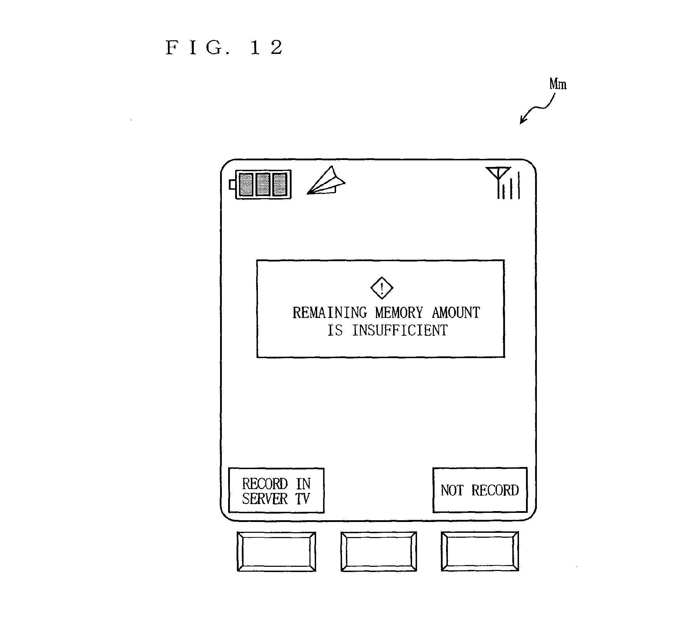

When the remaining memory capacity is determined to be smaller than the memory amount required to record the show, the notification Mm including the message indicating that "remaining memory capacity is insufficient" (FIG. 12) and the programmed show information IRP is performed. At the same time, the mobile control section 203c provides a display for receiving the next user's instruction with respect to the message. As an exemplary display, as illustrated in a lower portion of FIG. 12, instruction items which the user can provide in this case are displayed, including "record in server TV", "not record", and the like, corresponding to input buttons.

Here, if it is determined that recording is not performed in the server television 100b, the user presses down a button corresponding to the display "not record". The instruction is transferred to the mobile control section 203c, the mobile control section 203c ends the display of FIG. 11, and the notification acknowledgement mail Mt is transmitted via the mobile communications section 201 to the server television 100b. The server television 100b receives the notification acknowledgement mail Mt, and therefore, does not record the show.

When a show is recorded in the server television 100b, a button corresponding to the display indicating that "record in server TV" is pressed down. The instruction is transferred via the user operation input section 215b to the mobile control section 203c. The mobile control section only controls to end the display of FIG. 12, and does not transmit the notification acknowledgement mail Mt. In this case, in the server television 100b, recording of the show is started at the broadcast start time Tb of the show.

As described above, even when a programmed show cannot be viewed due to an insufficient remaining battery capacity, a control of determining whether or not the show is recorded in the server television 100b can be performed only by controlling whether or not the notification acknowledgement mail Mt is transmitted. Therefore, viewing or recording is not interrupted due to a dead battery during viewing or recording, so that the user does not fail to view the view-programmed show.

On the other hand, a message that "remaining memory capacity is insufficient, server television records" and the programmed show information IRP may be only displayed to the user, and the notification acknowledgement mail Mt may not be transmitted. In this case, the server television 100 starts recording the show at the broadcast start time Tb of the show. Therefore, the user cannot view the programmed show on the spot. Nevertheless, the contents of the show are recorded in the server television 100, thereby making it possible to prevent the user from failing to view the show.

### (Fourth embodiment)

Next, a view programming system according to a fourth embodiment of the present invention will be described. Note that a configuration of the view programming system PRA4 of this embodiment is similar to that of the view programming system PRA3 of the third embodiment of FIG. 10 and will not be described.

Hereinafter, an operation of the view programming system PRA4 will be described. The view programming system PRA4 is mainly characterized by an operation when the mobile terminal 200c is set to be in a state that a television cannot be viewed, such as a manner mode, a drive mode, or the like. An operation of the mobile terminal 200c of this embodiment will be described.

At a time which is earlier by a predetermined time than the broadcast start time Tb of a programmed show, the server television 100b transmits a show start notifying mail Ms. When the mobile terminal 200c is outside a service area or is powered off, the mobile terminal 200c cannot receive the show start notifying mail Ms, so that a notification acknowledgement mail Mt is not transmitted. In this case, the server television 100b starts recording of the view-programmed show at the broadcast start time Tb. When the mobile terminal 200c has received the show start notifying mail Ms, the mobile terminal 200c analyzes the contents of the show start notifying mail Ms in accordance with the predetermined protocol.

In the mobile terminal 200c, it is determined whether or not the mobile terminal 200c is set to be in a state that a television cannot be viewed, such as a manner mode, a drive mode, or the like. When the mobile terminal 200c is in an ordinary state, but not in the manner mode or the like, a display indicating that the programmed show is starting soon is provided to the user. The subsequent operations are similar to those of the above-described view programming system PRA2 of the second embodiment.

When the mobile terminal 200c is in a state that a television cannot be viewed, such as the manner mode, the drive mode, or the like, the view programming system PRA4 is automatically brought into a recording operation. Specifically, initially, the mobile control section 203c calculates a required recording time based on the broadcast start time Tb and the show end time which are obtained by analyzing the contents of the show start notifying mail Ms, and obtains data of the remaining capacity of the battery from the remaining capacity detecting section 207. Based on the remaining battery capacity data, a maximum time for which the show can be recorded using the remaining capacity is calculated, and is compared with the show required time.

When it is determined that the maximum time for which the show can be recorded using the remaining capacity is smaller than the required recording time, the notification acknowledgement mail Mt is not transmitted, and the process is ended. In this case, the server television 100b starts recording the show at the broadcast start time Tb. As a result, the user cannot view the programmed show using the mobile terminal 200c. Nevertheless, it is possible to prevent the user from failing to view the show.

When it is determined that the maximum time for which the show can be recorded using the remaining battery capacity is larger than the required recording time, the remaining capacity detecting section 207 obtains the remaining memory capacity data of the recording section 206. The mobile control section 203c calculates the required view time based on the broadcast start time Tb and the end time which are obtained by analyzing the contents of the show start notifying mail Ms, calculates a memory amount required to record the show, and compares the remaining memory amount data with the memory amount required to record the show.

When it is determined that the remaining memory amount data is smaller than the memory amount required to record the show, the notification acknowledgement mail Mt is not transmitted, and the process is ended. In this case, the server television 100b starts recording the show at the broadcast start time Tb. As a result, the user cannot view the programmed show using the mobile terminal 200c. Nevertheless, it is possible to prevent the user from failing to view the show.

When the programmed show can be recorded in the mobile terminal 200 in view of the remaining battery capacity and the remaining memory capacity, the show is automatically recorded in the recording section 206. Specifically, the mobile control section 203c controls the television broadcast receiving section 202 based on data, such as a view channel obtained by analyzing the contents of the show start notifying mail Ms in accordance with the predetermined protocol, or the like, obtains received data of a television broadcast from the television broadcast receiving section 202, and records the received data into the recording section 206. In addition, the mobile control section 203c creates a notification acknowledgement mail Mt with respect to the show start notifying mail Ms, and transmits the notification acknowledgement mail via the mobile communications section 201 to the server television 100. The subsequent operations of the server television 100b are similar to those described above.

According to the above-described operation, even when a show which the user wants to view starts in a state that a television cannot be viewed, such as the manner mode, the drive mode, or the like, the contents of the show are recorded into either the mobile terminal 200c or the server television 100b, so that the user does not fail to view the show which the user wants to view.

Note that, as described above, when a programmed show has been automatically recorded, a message indicating that the view-programmed show has been recorded in a memory built in the mobile terminal 200c or the server television 100b, may be created in an electronic mail format, and may be put in a received mail list. In this case, after turning off the manner mode, it is possible to confirm that a show which the user wants to view has been recorded, so that the user does not fail to view the show.

### (Fifth embodiment)

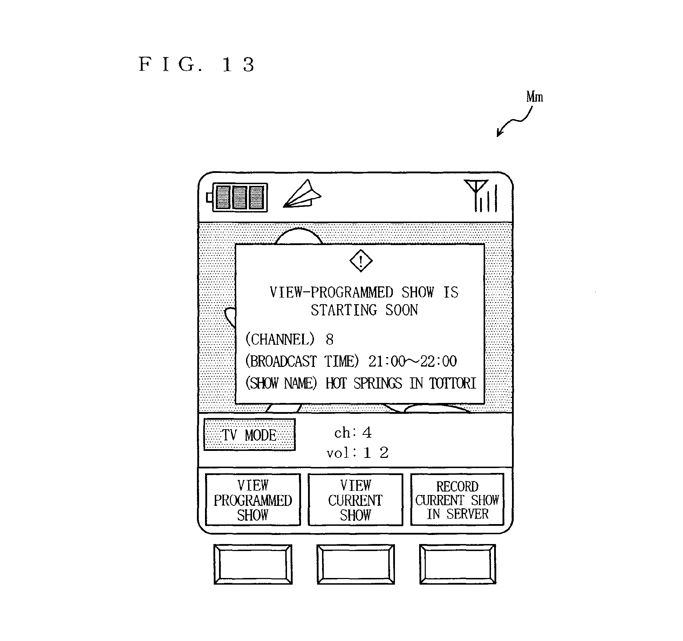

Next, a view programming system according to a fifth embodiment of the present invention will be described with reference to FIG. 13. Note that a configuration of the view programming system PRA5 of this embodiment is similar to that of the view programming system PRA3 of the third embodiment of FIG. 10 and will not be described. Note that the view programming system PRA5 of this embodiment is mainly characterized by an operation when the user is already being viewing another show since before the broadcast start time Tb of a programmed show.

Assuming that a show which is different from a show view-programmed in the server television 100b is being viewed using the mobile terminal 200c, when a show start notifying mail Ms is received, the contents of the show start notifying mail Ms are analyzed, and a notification Mm which displays a message indicating that the programmed show is starting soon is performed with respect to the user. However, since the other show is displayed at the time when the user is notified, the notification Mm is performed, for example, on the screen while displaying the currently viewed show and outputting audio as illustrated in FIG. 13. In this case, instruction items which the user can select, such as "view programmed show", "view current show", and "record programmed show in server TV", are displayed as illustrated in FIG. 13.

If the user stops viewing the currently displayed show and views the view-programmed show after receiving the notification Mm, the user presses down a button corresponding to the display indicating that "view programmed show". Thereafter, the mobile control section 203c, which has received the instruction via the user operation input section 215b, ends the display indicating that the programmed show is starting soon and the display of the currently viewed show (FIG. 13), controls the television broadcast receiving section 202 based on data (the view channel of the view-programmed show, etc.) obtained as a result of analysis of the contents of the show start notifying mail Ms in accordance with the predetermined protocol to obtain received data of a television broadcast, and presents the contents of the view-programmed show to the user via the video audio presenting section 204.

In addition to the above-described operation, the mobile control section 203c creates a notification acknowledgement mail Mt with respect to the show start notifying mail Ms transmitted from the server television 100b, and transmits the notification acknowledgement mail Mt via the mobile communications section 201 to the server television 100b.

Alternatively, when the user has received a notice indicating that a programmed show is starting soon and, however, does not view the view-programmed show and continues to view a currently displayed show, the user presses down a button corresponding to the display indicating that "view current show". In this case, the mobile control section 203c ends the on-screen display indicating that the view-programmed show is starting soon (FIG. 13), continues to display the currently displayed show, creates a notification acknowledgement mail Mt, and transmits the notification acknowledgement mail Mt via the mobile communications section 201 to the server television 100b.

The case where the user continues to view the currently displayed show on the spot, does not view a view-programmed show, and causes the server television 100b to record the view-programmed show, will be described. In this case, the user presses down a button corresponding to the display indicating that "record programmed show in server TV" . In this case, the mobile control section 203c ends the on-screen display indicating that the view-programmed show is starting soon (FIG. 13) and continues to display the currently displayed show, and does not transmit the notification acknowledgement mail Mt. Thereby, the server television 100b, which does not receive the notification acknowledgement mail Mt after the broadcast start time Tb has passed, records the programmed show. This operation is performed as described above. Note that, when the user views a view-programmed show and causes the server television 100b to record the show, the user similarly presses down the "record programmed show in server TV" button.

As described above, in the view programming system PRA5 of this embodiment, even when the user is viewing a non-view programmed show different from a programmed show, the programmed show start mail Ms prevents the user from forgetting the programmed show, so that the user can select which of the shows the user views, and can continue to view the currently displayed non-view-programmed show and record the programmed show into the server television 100b. Therefore, even when a programmed show overlaps a currently viewed non-programmed show, one of these shows is recorded, so that the user does not fail to view both of the shows.

Even when the user is not aware of arrival of a show start notifying mail Ms due to viewing of a show for some reason, the user does not transmit a notification acknowledgement mail, so that the show is recorded in a server television, thereby preventing the user from failing to view the show.

### (Sixth embodiment)

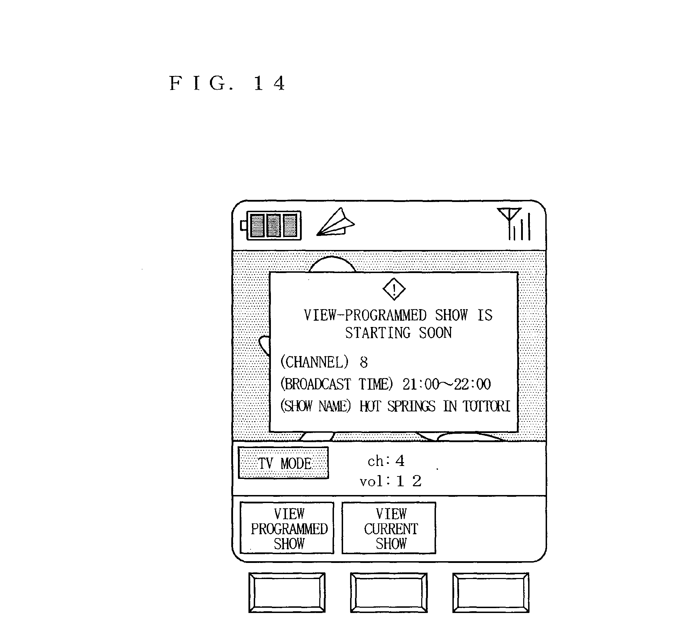

Next, a view programming system according to a sixth embodiment of the present invention will be described with reference to FIGS. 14, 15, 16, and 17. Note that a configuration of the view programming system PRA6 of this embodiment is similar to that of the view programming system PRA3 of the third embodiment of FIG. 10 and will not be described. Note that the view programming system PRA6 of this embodiment is mainly characterized by an operation when the user is already viewing another show since before the broadcast start time Tb of a programmed show, as is similar to the view programming system PRA5 of the fifth embodiment.

Assuming that a show which is different from a programmed show is being viewed using the mobile terminal 200c, when a show start notifying mail Ms is received, the contents of the show start notifying mail Ms are analyzed, and a notification is performed on the screen while displaying the currently viewed show and outputting audio. These operations are similar to those of the view programming system PRA5 of the fifth embodiment.

Note that, in the view programming system PRA6 of this embodiment, instruction items which the user can select, such as "view programmed show" and "view current show", are displayed as illustrated in FIG. 14.

When the user has received the notification and continues to view the currently displayed show, the user presses down a button corresponding to a display indicating that "view current show". Alternatively, when the user stops viewing the currently displayed show and views a programmed show, the user presses down a button corresponding to a display indicating that "view programmed show".

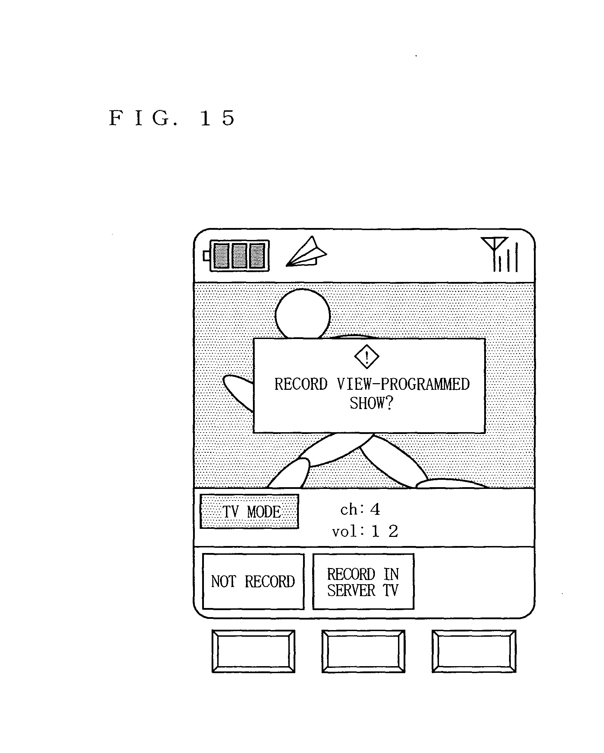

When the instruction that "view current show" is received from the user, a display indicating that "record view-programmed show?" is provided on the screen as illustrated in FIG. 15. Thus, regarding recording of a show which has not been selected, a display for receiving a user's selective instruction ("not record" and "record in server TV") is provided.

Here, an operation when a button corresponding to the display indicating that "not record" is pressed down is the same as when the button corresponding to the display indicating that "view current show" is pressed down in the above-described view programming system PRA5, and will not be described. An operation when a button corresponding to the display indicating that "record in server TV" is pressed down is the same as when the button corresponding to the display indicating that "record programmed show in server TV" is pressed down in the view programming system PRA5, and will not be described.

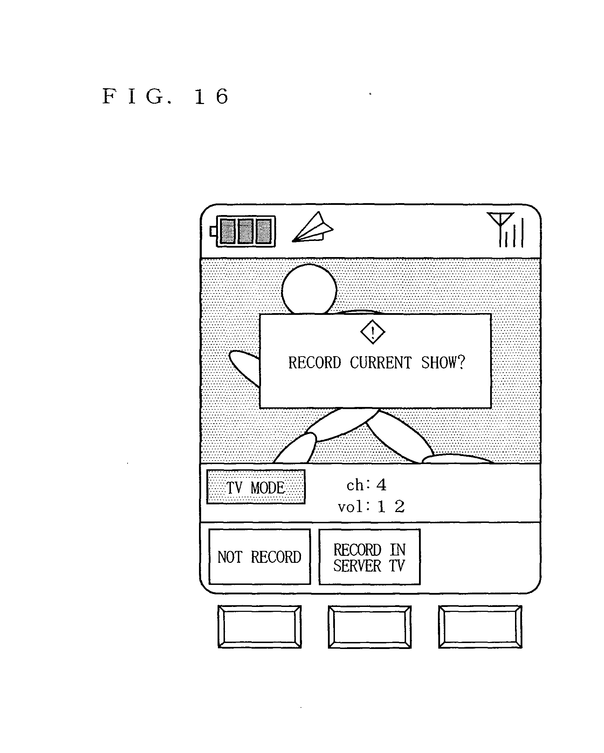

Next, when the instruction that "view programmed show" is received from the user, an on-screen display indicating that "record current show?" is provided as illustrated in FIG. 16. Thus, regarding recording of a show which has not been selected, a display for receiving a user's selective instruction ("not record" and "record in server TV") is provided.

Here, an operation when a button corresponding to the display indicating that "not record" is pressed down is the same as when the button corresponding to the display indicating that "view current show" is pressed down in the above-described view programming system PRA5, and will not be described.

Next, an operation of the view programming system of the present invention when the button corresponding to the display indicating that "record in server TV" is pressed down, i.e. , when the show currently viewed using the mobile terminal 200 is recorded in the server television 100 from the current time, will be described.

The mobile control section 203c, which has received the instruction via the user operation input section 215b, ends the display of FIG. 16 and the currently viewed show, and controls the television broadcast receiving section 202 based on data, such as a view channel of a programmed show obtained as a result of analyzing the contents of the show start notifying mail Ms, obtains received data of a television broadcast from the data, and provides the contents of the programmed show to the user via the video/audio section 204. These operations are similar to those of the fifth embodiment.

In addition to the above-described operation, the mobile control section 203c creates a show information change mail Ma which is a return mail having contents changed as described below, with respect to the show start notifying mail Ms of the server television 100b, and transmits the show information change mail Ma via the mobile communications section 201 to the server television 100b.

The show information change mail Ma includes changed programmed show information IRPm prescribing a view programming having contents different from those of a view programming for which the programmed show information IRP is prescribed instead of the programmed show information IRP included in the show start notifying mail Ms. Specifically, the changed programmed show information IRPm is returned via the show information change mail Ma to the server television 100b, so that the contents of a view programming (reception or recording) performed by the server television 100b are changed.

The show information change mail Ma is created as follows. The destination (receiver) of the show information change mail Ma is set to be the source (sender) of the received show start notifying mail Ms, and the source (sender) of the show information change mail Ma is set to be the address of the mobile terminal 200c. The "Subject (subject of an electronic mail)" of the show information change mail Ma is set to be the contents of the original "Subject" including the above-described password for identifying data which is mutually transferred.

In the text portion of the mail main body, the content data of the show start notifying mail Ms (a programmed view date, a view channel, a view start time, a view end time, and a viewed show name) are changed, so that, following a previously set identifier, information data of a show to be recorded in a server television (i.e., in this embodiment, the broadcast date, channel, start time, end time, and show name of a currently viewed show) is described in a predetermined format as the changed programmed show information IRPm. In other words, the changed programmed show information IRPm is information for view-programming a new show in the server television 100b.

Next, an operation of the server television 100b will be described. After the show start notifying mail Ms is transmitted, the show information change mail Ma and the notification acknowledgement mail Mt are checked at least until the end time of broadcast of a view-programmed show. The check may be performed in an idling period between other control operations, or may be performed at predetermined intervals in accordance with timer information (clock information).

When the electronic mail M is received in the network communications section 110, the server TV control section 112b checks the contents of the "Subject". When information in the "Subject" does not match a previously set password, the electronic mail M is determined to be an ordinary electronic mail M, so that a process corresponding to an ordinary electronic mail is performed.

When the information in the "Subject" matches the password previously set along with the mobile terminal 200c, the electronic mail M is determined to be an electronic mail relating to a view programming (the show information change mail Ma or the notification acknowledgement mail Mt). Further, the contents of the text portion of the mail main body are checked. When the contents match the data of the transmitted show start notifying mail Ms, it is determined that a notification acknowledgement mail Mt corresponding to the show start notifying mail Ms has been transmitted.

However, when the information in the "Subject" matches the password previously set along with the mobile terminal 200c and the contents of the text portion of the mail main body do not match the data of the transmitted show start notifying mail Ms, it is determined that the mobile terminal 200c has transmitted the show information change mail Ma.

When a server TV control section 112 confirms the show information change mail Ma, the server TV control section 112 determines that the user instructs to "record in server television 100b based on changed show information". Therefore, the server TV control section 112 decodes the contents of the show information change mail Ma in accordance with a predetermined protocol. When the broadcast start time Tb of the view-programmed show has passed, the television broadcast receiving section 111 is controlled based on the changed programmed show information IRPm, received data of a television broadcast is obtained from the changed programmed show information IRPm, the received data is written into the storing section 114 and recorded until the show end time. When the broadcast start time Tb has not yet come at the current time, the changed programmed show information IRPm of the show information change mail Ma is added to the programmed show information IRP or the view programming information IRA of the server television 100b itself.

Note that, in this embodiment, since data of a show which is already being viewed using the mobile terminal 200c is transmitted as the show information change mail Ma, the server television 100b records the show immediately after receiving the show information change mail Ma. Thereby, even in the case where the show start notifying mail Ms is received when a non-view-programmed show different from a programmed show is being viewed using the mobile terminal 200c, viewing of the currently displayed show is stopped, and the programmed show is viewed, a continuation of the show which is being viewed is recorded in the server television 100b.

Since the continuation of the currently viewed show is recorded, the channel data and the end time data (the contents of the show information change mail Ma) of a show to be recorded may be transmitted as the changed programmed show information IRPm.

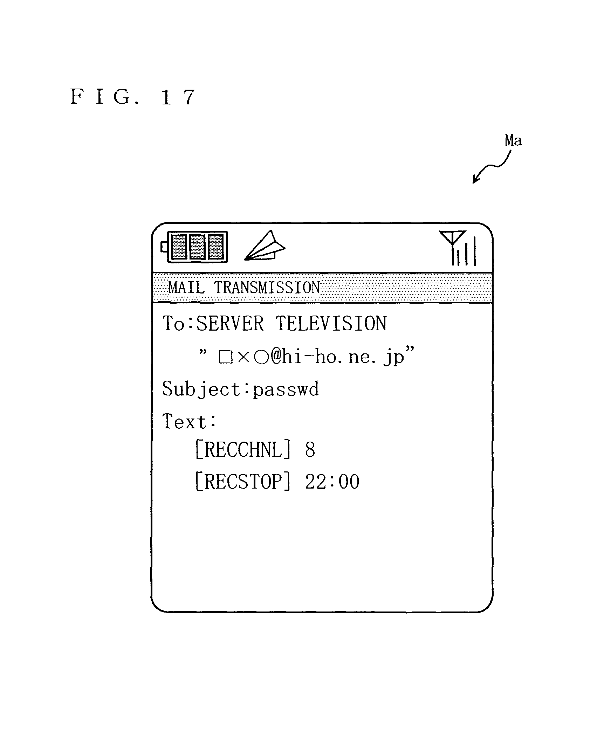

Alternatively, as illustrated in FIG. 17, the channel data and the end time data (the changed programmed show information IRPm) of a show may be described along with identifiers ([RECCHNL] and [RECSTOP] in FIG. 17) for clearly indicating that the information of a show to be recorded in the server television 100b has been changed. As in these cases, the changed programmed show information IRPm in which at least the broadcast start time Tb of a show is eliminated is described, and when an electronic mail in which information in the "Subject" matches a previously set password is received, the server television 100b may record the contents of a show at a described channel from the time of reception in accordance with the described changed programmed show information IRPm.

In addition, assuming that the contents of the "Subject" are those obtained by adding management information with a password, even if a plurality of notification acknowledgement mails Mt or show information confirmation mails are transferred from the same mobile terminal 200c, it can be easily determined to which show start notifying mail Ms the show information change mail Ma corresponds.

According to the view programming system PRA6 of this embodiment, the programmed show information IRP is transmitted via the show start notifying mail Ms, the programmed show information IRP is received via the notification acknowledgement mail Mt returned with respect to the programmed show information IRP, and reception of the changed programmed show information IRPm is confirmed via the show information change mail Ma, thereby preventing the user from failing to view a programmed show. In addition, even when the broadcast time of a programmed show overlaps the broadcast time of a show which is currently viewed using the mobile terminal 200c, the user is prevented from failing to view both of the shows, since one of the shows is recorded. In addition, viewing or recording of the show and selection of the maj or recording body can be performed using the mobile terminal 200c even on the road, i.e., away from the view-programmed server television 100b.

### (Embodiment 7)

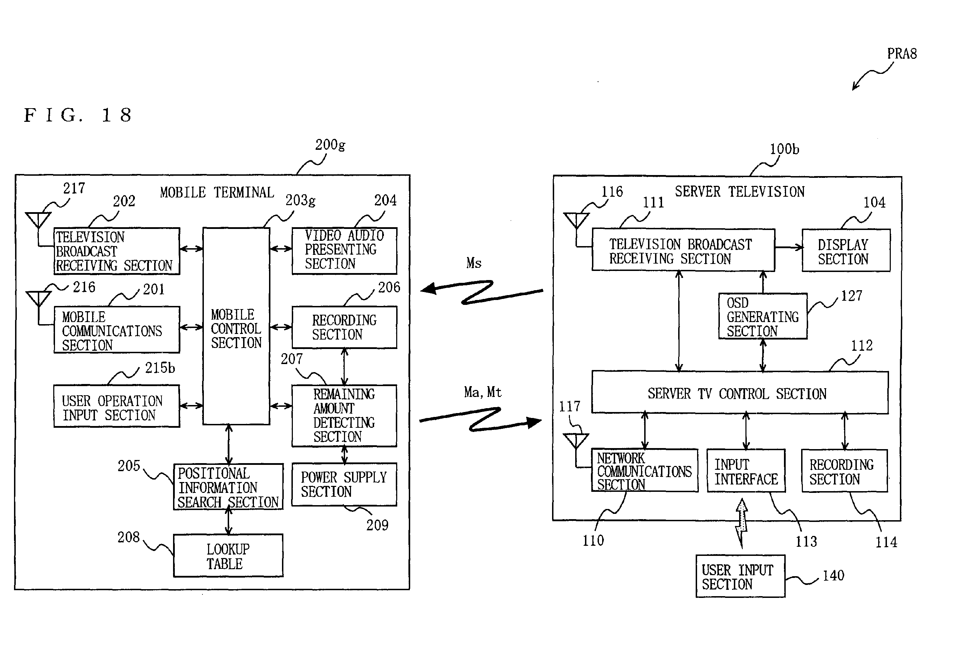

Next, a view programming system according to a seventh embodiment of the present invention will be described with reference to FIGS. 18, 19, and 20. Note that the view programming system PRA7 of this embodiment is different from the view programming system PRA3 of FIG. 10 in that the mobile terminal 200c is replaced with a mobile terminal 200g. The mobile terminal 200g is different from the mobile terminal 200c in that the mobile control section 203c is replaced with a mobile control section 203g, and a positional information search section 205 and a lookup table 208 are newly provided.

The positional information search section 205 has a function of detecting a geographical location where the mobile terminal 200g is present, and further determining whether or not the mobile terminal 200g is present in the same viewing area as that of the server television 100b, using the lookup table 208. The lookup table 208 includes information about a broadcast station(s) in each area, and has a function of receiving positional information data and outputting broadcast station information for that area.

This embodiment is mainly characterized by an operation of the view programming system when a show start notifying mail Ms is received, though a channel at which the show is broadcast is different from the programmed contents, since the mobile terminal 200g is located at a distance from the server television 100b. Hereinafter, the operation will be specifically described.

When the mobile terminal 200g receives a show start notifying mail Ms, the mobile control section 203g decodes programmed show information IRP and the positional information search section 205 searches for a location where the mobile terminal 200g is present. Examples of the search method include GPS (Global Positioning System) positioning, a method of using a difference between stations for PHS (Personal Handyphone System) and PDC (Personal Digital Cellular), and the like.

Thereafter, it is determined whether or not the view-programmed show is broadcast at a channel which has been programmed at a place where the mobile terminal 200g is present, i.e., whether or not the contents of a television broadcast in an area where the mobile terminal 200g is present are the same as the contents of a television broadcast in an area where the server television 100b is present, with reference to broadcast station information which is previously accumulated for each area in a lookup table 8.

If the area where the mobile terminal 200g is present and the area where the server television 100b is present have the same broadcast station corresponding to a programmed channel, it is determined that these area are the same broadcast area. The operation in this case has already been described above.

On the other hand, when different broadcast stations correspond to the programmed channel, it is determined that the broadcast contents are different from the set contents. In this case, it is not possible to receive broadcast of a view-programmed show based on the programmed show information IRP of the show start notifying mail Ms. In order to receive the show broadcast, it is necessary to know whether or not the view-programmed show is broadcast in at least the area where the mobile terminal 200g is currently present.

Therefore, the mobile terminal 200g automatically obtains, via a network or the like, EPG data for the area where the mobile terminal 200g is currently present, and tries to obtain show information IBP indicating a broadcast station (channel number) broadcasting a programmed show, a broadcast time, and the like, from the programmed show information IRP described in the show start notifying mail Ms and the obtained EPG data (the show information IBP). If information about such a so-called alternative broadcast is found, the mobile terminal 200g can view the view-programmed show using the mobile terminal 200g by correcting the programmed show information IRP using the alternative broadcast information thus obtained.

However, in an area where the programmed show is not broadcast, or when there is substantially no alternative broadcast due to a different broadcast date or the like, the programmed show information IRP cannot be corrected. In this case, the mobile control section 203g creates and transmits a show information change mail Ma via a mail transmitting section 201, and uses the changed programmed show information IRPm to cause the server television 100b to newly record the view-programmed show.

In this case, the contents of the changed programmed show information IRPm contained in the show information change mail Ma are assumed to have a change only in the channel data and the end time data of the programmed show information IRP contained in the received show start notifying mail Ms. Alternatively, as illustrated in FIG. 17, the channel data and the end time data of a show may be described, following identifiers ([RECCHNL] and [RECSTOP] in FIG. 17) for clearly indicating that the information of a show to be recorded in the server television 100b has been changed. Alternatively, data relating to the broadcast start time Tb of a show may be deleted from the contents of the received show start notifying mail Ms.

Thereafter, the changed programmed show information IRPm in which at least the broadcast start time Tb of the show is deleted is described in the server television 100b, which has received the show information change mail Ma. Thereafter, the contents of the show at the described channel are recorded from the reception time to the show end time.

Note that the notification acknowledgement mail Mt may be transmitted instead of the show information change mail Ma, the programmed show information IRP is used to cause the server television 100b to record a view-programmed show.

As described above, according to the view programming system PRA7 of this embodiment, when the user carries the mobile terminal 200g to a distant place where a show is not broadcast at a view-programmed time, the broadcast contents are automatically searched and the programmed settings are corrected, thereby making it possible to view the desired show. Even if the show cannot be viewed on the spot, the server television records the show, thereby preventing the user from failing to view the show.

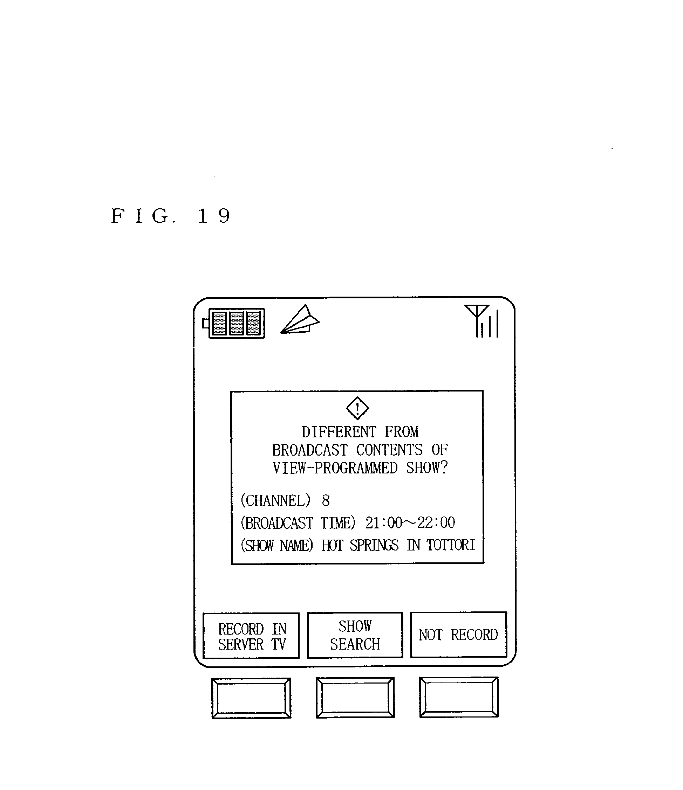

Although the above-described operations are automatically performed, a message indicating that "broadcast contents are different from programmed show" may be displayed as illustrated in FIG. 19, regarding whether or not a show search (EPG is grabbed and the programmed show information IRP is corrected) needs to be performed, or whether or not a programmed show needs to be recorded in the server television 100b, and a user's instruction may be received.

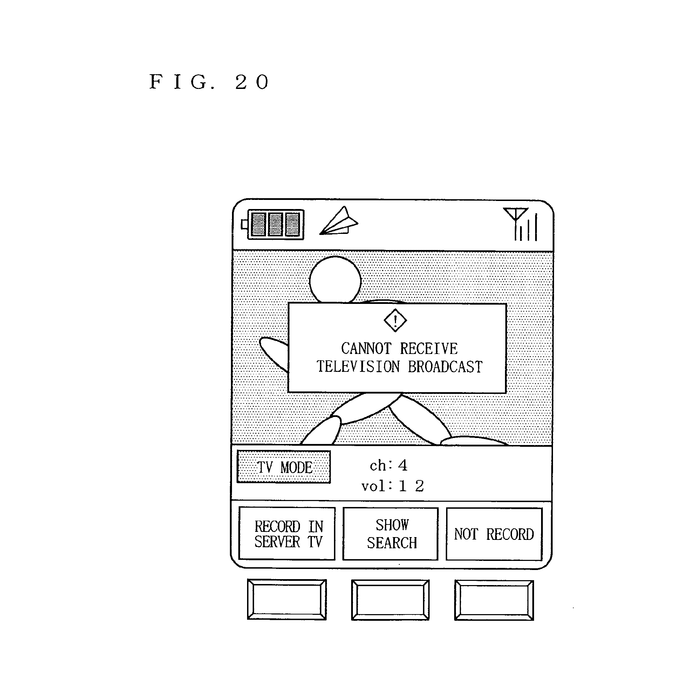

Note that, in this embodiment, there may be the case where the user goes out of a service area while viewing a programmed show, so that the user can no longer receive the show which the use is viewing. Also in this case, as is similar to those described above, EPG data is obtained, and a show search is performed based on the name of the show which the user is currently viewing to search for the same show broadcast by another broadcast station. If the show is broadcast by another station, the channel for television reception is changed and the user continues to view the show. If the show is not broadcast, the mobile terminal 200g transmits a show information change mail Ma in which information about the currently viewed show is described to the server television 100b, so that a continuation of the show is recorded in the server television 100b. Alternatively, a message indicating that "cannot receive television broadcast" as illustrated in FIG. 20 may be displayed and a user' s instruction may be received.

As described above, even when the user goes out of a television service area while viewing a show which has been once view-programmed, the show is automatically chased so that the user can continue to view the show. Even if the user cannot view the show on the spot, the server television 100b records the show, so that the user does not fail to view the show.

This embodiment is not limited to the case where a view-programmed show is viewed, and similarly functions when the show is recorded in the mobile terminal 200g. Specifically, the view programming system PRA7 is effective when broadcast of a show prescribed in the programmed show information IRP cannot be received due to movement of the mobile terminal 200g.

### INDUSTRIAL APPLICABILITY

The present invention can be used in versatile view programming applications which perform, for example, a view programming with respect to a plurality of mobile terminals and a plurality of receiving terminals which have a show receiving function and can exchange electronic mails via a network.

## Claims

1. A view programming system (PRA) capable of a view programming of a show which a user wants to view, among shows (Dav) composed of content data provided from a content data source, comprising:
at least one show receiving apparatus (200) capable of receiving the shows (Dav); and
at least one view programming apparatus (100) of programming the show receiving apparatus (200) to receive a show (Dav),
wherein the show receiving apparatus (200) can receive an electronic mail (M) via a network (320), and
the view programming apparatus (100) transmits a first electronic mail (Ms) including programmed show information (IRP) prescribing the show (Dav) to be received, via the network (320) to the show receiving apparatus (200).

2. The view programming system (PRA) according to claim 1, wherein the view programming apparatus (100) comprises:
show information obtaining means (132) of obtaining show information (EPG) indicating a schedule on which the shows (Dav) are to be provided;
displayingmeans (104) ofdisplayingashowtable (IBP) based on the show information (EPG);
view programming information generating means (140, 113) of generating the programmed show information (IRP) in response to a user's selection input of a show to be view-programmed based on the displayed show table (IBP);
first electronic mail generating means (112b) of generating the first electronic mail (Ms) in association with an electronic mail address assigned to the reception apparatus (200); and
first electronic mail transmitting means (110) of transmitting the first electronic mail (Ms) to the electronic mail address.

3. The view programming system (PRA) according to claim 2, wherein the programmed show information (IRP) includes at least information indicating a broadcast start time (Tb) and an end time of the view-programmed show and a source from which the show (Dav) is obtained.

4. The view programming system (PRA) according to claim 3, wherein the first electronic mail (Ms) is transmitted between a show start notifying time (Tmb) which is earlier by a predetermined time (Pi) than the broadcast start time (Tb), and the start time (Tb).

5. The view programming system (PRA) according to claim 4, wherein the first electronic mail (Ms) further contains a predetermined message (MMs).

6. The view programming system (PRA) according to claim 5, wherein the message (MMa) is set for each show receiving apparatus (200).

7. The view programming system (PRA) according to claim 3, wherein an identification icon (402, 403, 404) is set for each show receiving apparatus (200), and
a show view-programmed in association with each corresponding show receiving apparatus (200) is indicated by the icon (402, 403, 404) on the show table (IBP).

8. The view programming system (PRA2) according to claim 5, wherein
the view programming apparatus (100b) further comprises:
first recording means (114) of recording a received show (Dav),
the show receiving apparatus (200b) comprises:
second electronic mail generating means (203b) of generating a second electronic mail (Mt) as a return mail with respect to the first electronic mail (Ms); and
second electronic mail transmitting means (201) of transmitting the second electronic mail (Mt) to the view programming apparatus (100), and
when the view programming apparatus (100b) does not receive the second electronic mail (Mt) by the broadcast start time (Tb), the view programming apparatus (100b) records the view-programmed show (IRP) into the first recording means (114).

9. The view programming system (PRA2) according to claim 1, wherein the show receiving apparatus (200b) displays a view-programmed show based on the programmed show information (IRP).

10. The view programming system (PRA2) according to claim 8, wherein the show receiving apparatus (200b) further comprises second recording means (206) of recording the received show (Dav), and records a view-programmed show into the second recording means (206) based on the programmed show information (IRP).

11. The view programming system (PRA2) according to claim 1, wherein a password is set for each corresponding show receiving apparatus (200b), and a subject having the password of the show receiving apparatus (200b) is described in the first electronic mail (Ms).

12. The view programming system (PRA2) according to claim 18, wherein the view programming apparatus (100b) determines that an electronic mail having the password is determined as the second electronic mail (Mt), among received electronic mails (M).

13. The view programming system (PRA2) according to claim 18, wherein, when receiving the first electronic mail (Ms), the show receiving apparatus (200b) displays the predetermined message (MMs), transmits the second electronic mail (Mt) when the view-programmed show is not recorded in the view programming apparatus (100b), and does not transmit the second electronic mail (Mt) when the view-programmed show is recorded in the view programming apparatus (100b).

14. The view programming system (PRA3) according to claim 8, wherein the show receiving apparatus (200c) is a mobile terminal which is driven by a built-in power supply (209),
the view programming system further comprises remaining amount detecting means (207) of detecting a remaining power amount of the power supply (209), and
when the first electronic mail (Ms) is received, the remaining power amount is detected, a maximum viewing time for which a show can be viewed is calculated based on the remaining power amount, a required view time required to view the view-programmed show is calculated based on the programmed show information (IRP), and when the maximum viewing time is smaller than the required view time, the view-programmed show is recorded into the first recording means (114).

15. The view programming system (PRA3) according to claim 8, wherein the show receiving apparatus (200c) further comprises remaining recording capacity detecting means (207) of detecting a remaining recording capacity of the second recording means (206), and when the first electronic mail (Ms) is received, a remaining recording capacity is calculated, a maximum recording time for which the view-programmed show can be recorded is calculated based on the remaining recording capacity, a required view time required to view the view-programmed show is calculated based on the programmed show information (IRP), and when the maximum recording time is smaller than the required view time, the view-programmed show is recorded into the first recording means (114).

16. The view programming system (PRA) according to claim 10, wherein, when the show receiving apparatus (200c) receives the first electronic mail (Ms) in a situation where the show receiving apparatus (200c) is set to be in a state that reception of a received electronic mail (M) is not displayed, the show receiving apparatus (200c) records a view-programmed show into the second recording means (206) based on the programmed show information (IRP), and transmits the second electronic mail (Mt) .

17. The view programming system(RPA3) according to claim 12, wherein, when the view programming apparatus (100b) does not receive an electronic mail (M) which is a return mail with respect to the first electronic mail (Ms) by the broadcast start time (Tb), the view programming apparatus (100b) records the view-programmed show into the first recording means (114), and when the view programming apparatus (100b) receives a third electronic mail (Ma) including changed programmed show information (IRPm) which is obtained by changing the programmed show information (IRP), as a return mail with respect to the first electronic mail (Ms), by the broadcast start time (Tb), the view programming apparatus (100b) records a show into the first recording means (114) based on the changed programmed show information (IRPm).

18. The view programming system (RPA3 to PRA7) according to claim 17, wherein, when broadcast start (Tb) indicated by the changed programmed show information (IRPm) has already passed at a time when the third electronic mail (Ta) is received, or when the broadcast start time Tb is lost, the view programming apparatus (100b) starts recording a show based on the changed programmed show information (IRPm) immediately after receiving the third electronic mail (Ma).

19. The view programming system (PRA3 to PRA7) according to claim 17, wherein, when a show which is being viewed using the show receiving apparatus (200c) continues to be recorded in the view programming apparatus (100b), the show receiving apparatus (200c) transmits the third electronic mail (Ma) in which the show information (IRPm) of the show which is being viewed is described.

20. The view programming system (PRA7) according to claim 17, wherein, when the first electronic mail (Ms) is received in the show receiving apparatus (100b), so that a view-programmed show which is being viewed cannot be viewed, information in which changed programmed show information (IRPm) indicating at least a show end time and a show obtaining source is included in the programmed show information (IRP) from which the broadcast start time (Tb) is eliminated, is transmitted as the third electronic mail (Ta).

21. The view programming system (RPA7) according to claim 17, wherein the show receiving apparatus (200g) further comprises:
positional information search means (205) of detecting a location where the show receiving apparatus (200g) is present; and
a lookup table (208) including information about a broadcast station for each area, of receiving positional information data and outputting broadcast station information about the area,
when a show indicated in the programmed show information (IRP) of the received first electronic mail (Ms) is in an area in which the show cannot be received, information in which information (IRPm) including at least a show end time and a show obtaining source is included in the programmed show information (IRP) from which the broadcast start time (Tb) is eliminated, is transmitted as the third electronic mail (Ma).

22. The view programming system according to claim 16, wherein the show receiving apparatus (200c) creates a fourth electronic mail in which a message indicating that a view-programmed show is recorded, and the fourth electronic mail is registered as an electronic mail to the show receiving apparatus (200c) itself.

23. A view programming apparatus (100) for view programming of a show which a user wants to view, among shows (Dav) composed of content data provided from a content data source, comprising:
show receiving means (150) of receiving a show; and
view programming information transmitting means (110, 113, 140) of transmitting an electronic mail (Ms) including programmed show information (IRP) prescribing a view-programmed show (Dav), via a network (320) to a show receiving apparatus (200).
